(19) **Europäisches Patentamt / European Patent Office / Office européen des brevets**

(11) **EP 4 765 218 A1**

(12) **EUROPEAN PATENT APPLICATION**
published in accordance with Art. 153(4) EPC

(43) Date of publication:
**24.06.2026  Bulletin 2026/26**

(21) Application number: **24856507.9**

(22) Date of filing: **22.08.2024**

(51) International Patent Classification (IPC):
$H01M\ 4/13^{(2010.01)}$  $H01M\ 4/04^{(2006.01)}$
$H01M\ 4/58^{(2010.01)}$  $H01M\ 4/62^{(2006.01)}$
$H01M\ 4/131^{(2010.01)}$  $H01M\ 4/133^{(2010.01)}$
$H01M\ 4/134^{(2010.01)}$  $H01M\ 4/139^{(2010.01)}$
$H01M\ 4/505^{(2010.01)}$  $H01M\ 4/525^{(2010.01)}$

(52) Cooperative Patent Classification (CPC):
H01M 4/04; H01M 4/13; H01M 4/131; H01M 4/133;
H01M 4/134; H01M 4/139; H01M 4/505;
H01M 4/525; H01M 4/58; H01M 4/62; Y02E 60/10;
Y02P 70/50

(86) International application number:
**PCT/JP2024/029777**

(87) International publication number:
**WO 2025/041819 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.08.2023  JP 2023136586**

(71) Applicant: **Canon Kabushiki Kaisha
Tokyo 146-8501 (JP)**

(72) Inventors:
• **MASADA, Yohei**
  **Tokyo 146-8501 (JP)**
• **KUBO, Kenta**
  **Tokyo 146-8501 (JP)**
• **AOTANI, Takaharu**
  **Tokyo 146-8501 (JP)**
• **TANIUCHI, Hiroshi**
  **Tokyo 146-8501 (JP)**
• **USAMI, Hirokazu**
  **Tokyo 146-8501 (JP)**
• **NAKAZAWA, Ikuo**
  **Tokyo 146-8501 (JP)**

(74) Representative: **WESER & Kollegen
Patentanwälte PartmbB
Radeckestraße 43
81245 München (DE)**

(54) **ELECTRODE BASE MATERIAL, ELECTRODE BASE MATERIAL LAMINATE, ELECTRODE, SECONDARY BATTERY, AND METHODS FOR MANUFACTURING SAME**

(57)  The present invention provides: an electrode base material for secondary batteries with which it is possible to manufacture a secondary battery that has a low internal resistance; an electrode base material laminate; an electrode; a secondary battery; and methods for manufacturing the same. Disclosed is an electrode base material comprising: a resin base material; and active material particles and solid electrolyte particles on the resin base material, a particle layer comprising the active material particles and the solid electrolyte particles being formed on the resin base material, wherein, when the particle layer is viewed from a surface side in contact with the resin base material or from a surface side opposite thereto, the solid electrolyte particles are arranged so as to cover at least a part of surfaces of the active material particles, and wherein, in an observation of a cross section of the particle layer with SEM, a difference between the exposed surface area ratio of the active material particles on a specific surface of the particle layer and the exposed surface area ratio on the opposite surface falls within a specific range.

**(Cont. next page)**

EP 4 765 218 A1

FIG. 1

## Description

TECHNICAL FIELD

The present disclosure relates to an electrode base material, an electrode base material laminate, an electrode, a secondary battery, and methods for manufacturing the same.

BACKGROUND ART

Typically, secondary batteries comprise electrodes (positive and negative electrodes) and an electrolyte and perform charging and discharging when ions move between the electrodes with the electrolyte therebetween. Such secondary batteries are used in a wide range of applications from small equipment such as mobile phones to large equipment such as electric vehicles. For this reason, further improvements in the performance of the secondary batteries are required.

In recent years, research and development of so-called all-solid-state batteries using an inorganic solid electrolyte as the electrolyte has advanced. All-solid-state batteries are expected to achieve improved safety as well as high capacity and output by replacing the conventional organic electrolyte with a solid electrolyte.

Meanwhile, in all-solid-state batteries, because both the active material and the solid electrolyte are solid and interfaces are formed between solid particles, the interface resistance becomes high. As a result, the internal resistance of the electrodes increases, and the resulting battery output decreases. Accordingly, technologies for reducing the internal resistance have been developed.

PTL 1 discloses an electrode in which active material particles and solid electrolyte particles are arranged in a pattern, thereby smoothing ionic conduction between the active material and the solid electrolyte.

PTL 2 discloses an electrode in which the density of active material particles is increased and the density of solid electrolyte particles is decreased on the collector side, whereas the density of the active material is decreased and the density of the solid electrolyte particles is increased on the solid electrolyte layer side, thereby smoothing ionic conduction.

CITATION LIST

PATENT LITERATURE

[PTL 1] Japanese Patent Publication No. 2019-137060
[PTL 2] Japanese Patent Publication No. 2021-039848

SUMMARY OF INVENTION

TECHNICAL PROBLEM

However, according to the studies made by the present inventors, it has been found that because the solid electrolyte is not suitable for electron conduction and the active material is not suitable for ionic conduction, only controlling the arrangement of each particle as in PTL 1 results in insufficient contact between the particles, which may not sufficiently reduce the internal resistance. Furthermore, when the density of each particle is inclined inside the electrode as in PTL 2, it has been found that contact between particles of the same type is insufficient between a low-density region and a high-density region, thereby resulting in portions where an ionic conduction path or an electron conduction path is not connected, and the internal resistance may not be sufficiently reduced. Therefore, there is a demand to further reduce the internal resistance of the electrodes and to further improve the output of the secondary battery.

At least one aspect of the present disclosure provides: an electrode base material for a secondary battery that is excellent in electron conductivity and ionic conductivity, and that enables manufacture of a secondary battery having low internal resistance and high output; an electrode base material laminate; an electrode; and a secondary battery. Furthermore, at least one aspect of the present disclosure provides methods for manufacturing the electrode base material, the electrode base material laminate, the electrode, and the secondary battery described above.

SOLUTION TO PROBLEM

At least one aspect of the present disclosure is directed to providing an electrode base material for use in manufacturing an electrode,

the electrode base material comprising:

a resin base material; and
active material particles and solid electrolyte particles on the resin base material,
a particle layer comprising the active material particles and the solid electrolyte particles being formed on the resin base material,
wherein, when the particle layer is viewed from a surface side in contact with the resin base material or from a surface side opposite to the side in contact with the resin base material, the solid electrolyte particles are arranged so as to cover at least a part of surfaces of the active material particles, and
wherein, in an observation of a cross section of the particle layer with a scanning electron microscope (SEM), a difference between an area ratio of exposed surfaces of the active material particles on a surface of the particle layer in contact with the resin base material and an area ratio of exposed surfaces of the active material particles on a surface of the particle layer on a side opposite to the side in contact with the resin base material is 1 to 70 area%.

At least one aspect of the present disclosure is directed to providing an electrode base material laminate, wherein a plurality of the above-mentioned electrode base materials is laminated.

At least one aspect of the present disclosure is directed to providing an electrode of a secondary battery, which is a sintered compact of the above-mentioned electrode base material. In addition, an electrode that is a sintered compact of the electrode base material laminate, that is a plurality of the above electrode base materials is laminated, will be provided.

At least one aspect of the present disclosure is directed to providing a secondary battery comprising: the electrode which is a sintered compact of the above-mentioned electrode base material; and an electrolyte layer adjacent to the electrode.

At least one aspect of the present disclosure is directed to providing a method for manufacturing the above-mentioned electrode base material for use in manufacturing an electrode,
the method comprising:

a step of preparing the resin base material comprising an adhesive portion;
a step of arranging the active material particles on a surface of the adhesive portion;
a step of rubbing surfaces of the active material particles arranged on the surface of the adhesive portion; and
a step of arranging the solid electrolyte particles on the surface of the adhesive portion and on the rubbed surfaces of the active material particles.

At least one aspect of the present disclosure is directed to providing a method for manufacturing an electrode base material for use in manufacturing an electrode, wherein

the electrode base material comprises
a resin base material, and
active material particles and solid electrolyte particles on the resin base material,
a particle layer comprising the active material particles and the solid electrolyte particles being formed on the resin base material and,
wherein, when the particle layer is viewed from a surface side in contact with the resin base material or from a surface side opposite to the side in contact with the resin base material, the solid electrolyte particles are arranged so as to cover at least a part of surfaces of the active material particles,
the method comprising:

a step of preparing the resin base material comprising an adhesive portion;
a step of arranging the active material particles on a surface of the adhesive portion;
a step of rubbing surfaces of the active material particles arranged on the surface of the adhesive portion; and
a step of arranging the solid electrolyte particles on the surface of the adhesive portion and on the rubbed surfaces of the active material particles.

At least one aspect of the present disclosure is directed to providing a method for manufacturing an electrode, the method comprising:

a step of laminating a plurality of the above-mentioned electrode base materials to form a laminate;
a step of removing the resin base material from the laminate to obtain a three-dimensional object; and
a step of pressing the three-dimensional object to obtain an electrode.

At least one aspect of the present disclosure is directed to providing a method for manufacturing a secondary battery,
the method comprising:

a step of preparing an electrode according to the above-mentioned method; and
a step of laminating the electrode, a collector, and an electrolyte.

ADVANTAGEOUS EFFECTS OF INVENTION

At least one aspect of the present disclosure provides: an electrode base material that is excellent in electron conductivity and ionic conductivity, and that enables manufacture of a secondary battery having low internal resistance and high output; an electrode; a secondary battery; and methods for manufacturing the electrode base material, the electrode, and the secondary battery.

BRIEF DESCRIPTION OF THE DRAWINGS

[FIG. 1] FIG. 1 is an image diagram illustrating an electrode base material.
[FIG. 2] FIG. 2 is an image diagram illustrating a method for manufacturing the electrode base material.
[FIG. 3] FIG. 3 is a view schematically illustrating the configuration of a particle arrangement apparatus 1.
[FIG. 4] FIG. 4 is a view schematically illustrating the configuration of a filling apparatus.
[FIG. 5] FIGS. 5A to 5C are schematic views illustrating, in stages, the state of a filler being transported on a first base material.
[FIG. 6] FIG. 6 is an enlarged view of the vicinity of a surface of the first substrate.
[FIG. 7] FIG. 7A is a view schematically illustrating the configuration of a filling apparatus in which brush fibers are used as the bearing material and FIG. 7B is a view schematically illustrating the configuration of a filling apparatus in which an elastic material is used as the bearing material.
[FIG. 8] FIG. 8 is a view schematically illustrating the configuration of a transfer unit.
[FIG. 9] FIG. 9 is an enlarged view of the vicinity of a surface of a second base material in a filling process by a second filling apparatus.
[FIG. 10] FIG. 10A is a view schematically illustrating a second base material after first particles P1 have been transferred, and FIG. 10B is a view schematically illustrating the second base material after second particles P2 have been transferred.
[FIG. 11] FIG. 11 is a view schematically illustrating the configuration of a particle arrangement apparatus 2.
[FIG. 12] FIG. 12 is a view schematically illustrating each device used in second and third steps in the method for manufacturing the electrode base material.
[FIG. 13] FIG. 13 is a view schematically illustrating a third filling apparatus without using a belt apparatus.
[FIG. 14] FIG. 14 is a schematic view illustrating the operation of the filling apparatus.
[FIG. 15] FIG. 15 is an image diagram illustrating a method for manufacturing an electrode.
[FIG. 16] FIG. 16 is a view schematically illustrating the configuration of a laminate forming apparatus.
[FIG. 17] FIG. 17 is a view schematically illustrating the configuration of a sintering processing apparatus.
[FIG. 18] FIG. 18A is an SEM image of a cross section of a laminate after a first step in the method for manufacturing the electrode, FIG. 18B is an SEM image of a three-dimensional object after a second step, and FIG. 18C is an SEM image of the three-dimensional object as viewed from above.
[FIG. 19] FIG. 19 is a diagram schematically illustrating the overall configuration of a lamination shaping system.
[FIG. 20] FIG. 20A is an image diagram illustrating a method 1 for manufacturing the electrode base material, FIG. 20B is an image diagram illustrating a method 2 for manufacturing the electrode base material, FIG. 20C is an image diagram illustrating a method 3 for manufacturing the electrode base material, and FIG. 20D is an image diagram illustrating a method 4 for manufacturing the electrode base material.
[FIG. 21] FIG. 21A is a view schematically illustrating the structure of the upper surface of the first base material having an unevenness pattern formed on its surface, and FIG. 21B is a cross-sectional view taken along line A-A in FIG. 21A.
[FIG. 22] FIG. 22A is an SEM image of the electrode base material according to Example 1 as viewed from above, and FIG. 22B is an SEM image of a cross section of the electrode base material according to Example 1.
[FIG. 23] FIG. 23A is a view illustrating an example of an SEM image obtained by capturing the upper surface of the electrode base material, and FIG. 23B is a view illustrating an example of a binarized image used for calculating a coverage rate.
[FIG. 24] FIG. 24 is a view illustrating an example of a cross-sectional image of the electrode base material captured by an electron microscope.

[FIG. 25] FIG. 25A is an example of an image cut out from an SEM image so as to indicate only a particle layer, the SEM image being used to calculate the areas of exposed surfaces of active material particles, FIG. 25B is an example of an image in which only the active material particles are represented by white pixels, FIG. 25C is an example of an image in which both solid electrolyte particles and active material particles are represented by white pixels, and FIG. 25D is an example of an image after noise elimination.

[FIG. 26] FIG. 26 is a BIB-SEM image of the cross section of the electrode manufactured using the electrode base material of Example 1.

[FIG. 27] FIG. 27A is a schematic view of an electrode base material laminate, and FIG. 27B is a schematic view of a cross section of an electrode manufactured using the electrode base material laminate.

## DESCRIPTION OF THE EMBODIMENTS

In the present disclosure, the expression of "from XX to YY" or "XX to YY" indicating a numerical range means a numerical range including a lower limit and an upper limit which are end points, unless otherwise specified. When a numerical range is described in a stepwise manner, any combination of the upper and lower limits of each numerical range is also disclosed.

When an inorganic solid electrolyte is used as an electrolyte, active material and electrolyte come into contact with each other in a solid state, making it difficult to obtain a sufficient contact area and to form a conduction path at an interface. In particular, when aggregation of the active material occurs, the aggregated active material becomes further less likely to contact the solid electrolyte, thereby tending to reduce ionic conductivity. As a result, the internal resistance of the battery may increase, resulting in a reduction in battery output.

In order to solve the above-described problems, the present inventors have conducted a detailed study on an arrangement of solid electrolyte particles and active material particles inside an electrode. As a result of the study, it has been found that both electron conductivity and ionic conductivity can be improved by arranging the respective particles such that the solid electrolyte particles cover at least a part of surfaces of the active material particles and by controlling the area ratio of the exposed surfaces of the active material particles.

Specifically, by setting a difference between the area ratio of the exposed active material particles on one surface of the electrode and the area ratio of the exposed active material particles on the other surface thereof to 1 to 70 area%, it is possible to improve both electron conductivity and ionic conductivity. This indicates that a large number of surfaces of the active material particles are exposed on one surface of the electrode, whereas a part of surfaces of the active material particles are covered with the solid electrolyte particles on the other surface, thereby reducing the area ratio of the exposed surfaces of the active material particles.

In the present disclosure, the above-described configuration is realized by an electrode base material in which active material particles and solid electrolyte particles, which have the characteristics of the present disclosure, are arranged on a resin base material. A plurality of the electrode base materials may be laminated to form an electrode base material laminate. Furthermore, the electrode base material and the electrode base material laminate can be used as electrode materials.

In a secondary battery manufactured using an electrode having such a configuration, a large number of active material particles are exposed on one surface of the electrode, thereby increasing the contact area between the active material excellent in electron conductivity and the collector, and smoothing electron transfer. Furthermore, on the surface of the electrode opposite to the above-described surface, the exposed area of surfaces of the active material particles is decreased, thereby increasing the contact area between solid electrolyte particles and smoothing ionic conduction. Because both electron conduction and ionic conduction become smooth, the internal resistance of the electrode decreases, thereby enabling an improvement in the output of the secondary battery.

In order to manufacture an electrode having the above-described configuration, it is important to control the arrangement of active material particles and solid electrolyte particles on the electrode base material. Specifically, the respective particles are arranged on a surface of the electrode base material such that the solid electrolyte particles cover at least a part of surfaces of the active material particles. Furthermore, the solid electrolyte particles are arranged so as to be unevenly distributed in the thickness direction of the electrode base material. By arranging the active material particles and the solid electrolyte particles in this manner, it is possible to arrange the particles such that the area ratio of the exposed surfaces of the active material particles on one surface of the electrode base material becomes sufficiently larger than the area ratio of the exposed surfaces of the active material particles on the other surface thereof. As a result, an electrode base material excellent in electron conductivity and ionic conductivity can be obtained.

By manufacturing an electrode using an electrode base material having the above-described configuration, it is possible to improve electron conduction between active material particles inside the electrode, electron conduction from the active material particles to the collector, and ionic conduction from the active material particles to the electrolyte. Furthermore, in a secondary battery using such an electrode, the internal resistance is reduced, thereby enabling an improvement in output.

In the present disclosure, for convenience, electron conductivity and ionic conductivity are evaluated using an index referred to as "rate characteristics" of a prototype battery.

Hereinafter, an electrode base material, an electrode base material laminate, an electrode, a secondary battery using these components, and methods for manufacturing these components will be described in detail.

The electrode base material of the present disclosure can be used to manufacture the electrode of a secondary battery. Although a positive-electrode base material using positive-electrode active material particles will be described below as an example, the electrode base material of the present disclosure can be used for both positive electrode and negative electrode.

The electrode base material comprises a resin base material, and an active material particle and a solid electrolyte particle on the resin base material. On the resin base material, a particle layer comprising the active material particle and the solid electrolyte particle is formed.

The resin base material is a base material formed of a resin-comprising material. By using a base material formed of an organic material such as a resin, removal of the base material by heating can be facilitated in the manufacturing process of the electrode base material, which will be described later.

The resin comprised in the resin base material is not particularly limited, but examples thereof include polyester such as polyethylene (PE), polypropylene (PP), and polyethylene terephthalate (PET), and polyamide such as nylon. Among these materials, PET is preferably used from the viewpoint of decomposition temperature and low hazardous properties of gas generated during thermal decomposition.

The active material particle is not particularly limited, and known particles can be used. For example, lithium-comprising composite oxides and the like can be used. Specifically, examples thereof include: Li-Co oxide-based active material particles such as $LiCoO_2$; active material particles such as $LiMO_2$ (where M is one element selected from the group consisting of Ni, Mn, and Co); Li-PO$_4$ oxide-based active material particles; Si-based active material particles (such as Si and Si-C); graphite-based active material particles (such as graphite, graphene, and carbon nanotubes); lithium vanadium compounds ($Li_3V_2(PO_4)_3$, $LiVOPO_4$); and olivine-type phosphate-based compounds ($LiMPO_4$ (where M is at least one element selected from the group consisting of Co, Ni, Mn, Fe, Mg, V, Nb, Ti, Al, and Zr).

Furthermore, positive-electrode active materials comprising no lithium may be used. Specifically, examples thereof include metal oxides (such as $MnO_2$ and $V_2O_5$), or fluorides (such as $FeF_3$ and $VF_3$). When positive-electrode active materials comprising no lithium are used, metallic lithium comprising lithium or negative-electrode active materials doped with lithium ions are provided as negative-electrode active materials, and the negative-electrode active materials can be used by starting discharge.

The present inventors have found that use of the Li-Co oxide-based active material particles among the above-described positive-electrode active material particles leads to an increase in the surface areas of the positive-electrode active material particles and an improvement in the output characteristics of the secondary battery (Japanese Patent Laid-open No. 2020-198301). Furthermore, the Li-PO$_4$ oxide-based active material particles are very stable because they have strong covalent bonds between P and O and suppress the release of oxygen. Therefore, among the above-described positive-electrode active material particles, the Li-Co oxide-based active material particles and the Li-PO$_4$ oxide-based active material particles are preferably comprised.

The active material particles may be commercially available products or materials separately prepared.

The Li-Co oxide-based active material particles can be, for example, Cellseed C-5H (product name, manufactured by Nippon Chemical Industrial Co., Ltd.) ($LiCoO_2$) or the like. Furthermore, $LiMO_2$ (where M is one element selected from the group consisting of Ni, Mn, and Co) can be Cellseed NMC (product name, manufactured by Nippon Chemical Industrial Co., Ltd.) ($LiNi_{(1-x-y)}Mn_xCo_yO_2$) or the like. The Li-PO$_4$ oxide-based active material particles can be $LiFePO_4$ (manufactured by TOSHIMA Manufacturing Co., Ltd.), $Li_3V_2(PO_4)_3$ (manufactured by Tokyo Chemical Industry Co., Ltd.), or the like.

Furthermore, when active material particles having low electron conductivity, such as $LiFePO_4$ and $Li_3V_2(PO_4)_3$, are used, surfaces of the particles may be coated with carbon using a typical method.

Note that one type of active material particles may be used, or at least two types thereof may be used in combination.

The solid electrolyte particles are not particularly limited, and can be ion-conductive solids generally used in all-solid-state batteries. Examples thereof include Li-B oxide-based solid electrolyte particles, Li-Yb oxide-based solid electrolyte particles, NASICON-type oxide-based solid electrolyte particles (such as $LiAlTi(PO_4)_3$ and $LiAlGe(PO_4)_3$), perovskite-type oxide-based solid electrolyte particles (such as $Li_xLa_{(1-x)/3}TiO_3$ and $Li_xLa_{(1-x)/3}NbO_3$), garnet-type oxide-based solid electrolyte particles (such as $Li_7La_3Zr_2O_{12}$), and Li-P-O-based solid electrolyte particles (such as $Li_3PO_4$ and LiPON (particles obtained by substituting a part of O in $Li_3PO_4$ with N)). Among the above-described solid electrolyte particles, the Li-B oxide-based solid electrolyte particles and the Li-Yb oxide-based solid electrolyte particles can be sintered at a relatively low temperature (not more than 700°C), so that reaction with the positive-electrode active material particles during sintering is suppressed and ionic conductivity can be maintained. Therefore, among the above-described solid electrolyte particles, the Li-B oxide-based solid electrolyte particles and the Li-Yb oxide-based solid electrolyte particles are preferably comprised.

The solid electrolyte particles may be commercially available products or materials separately prepared.

The Li-B oxide-based solid electrolyte particles can be, for example, $Li_3BO_3$ (manufactured by TOSHIMA Manufacturing Co., Ltd.), particles obtained by substituting a part of O in the $Li_3BO_3$ with C, or the like. Furthermore, the Li-Yb oxide-based solid electrolyte particles can be, for example, a compound described in Japanese Patent Application Laid-open No. 2022-130301, such as $Li_{5.9}Yb_{0.81}La_{0.09}Zr_{0.1}(BO_3)_3$. These solid electrolyte particles may be made amorphous in advance by planetary ball milling or the like.

The area ratio of the exposed surfaces of the active material particles on the surface of the particle layer is determined by forming cross sections of the particle layer using a broad ion beam (BIB) with Ar, and then obtaining a two-dimensional image of the cross sections with a scanning electron microscope. Hereinafter, the above-described method for observing the two-dimensional image will be referred to as "BIB-SEM". Details of the measurement method will be described later.

In the electrode base material, the particle layer comprising the active material particles and the solid electrolyte particles is formed on the resin base material. Furthermore, when the particle layer is viewed from the surface side in contact with the resin base material or from the surface side opposite to the side in contact with the resin base material, the solid electrolyte particles are arranged so as to cover at least a part of the surfaces of the active material particles. By this arrangement, uniform dense regions of the active material particles and the solid electrolyte particles are provided, enabling sufficient contact between the active material particles and the solid electrolyte particles. As a result, ionic conductivity can be improved.

The active material particles are preferably arranged at the same height on the resin base material. Whether the active material particles are arranged at the same height can be determined from the above-described cross-sectional SEM image. In the present disclosure, the height of the active material particles refers to a height from the surface of the resin base material on which the active material particles are arranged to the position on the uppermost surfaces of the active material particles. The height of the active material particles can be measured by the method described later.

Although the active material particles may be arranged so as to have unevenness, the height of protruded portions is preferably not more than three times the average height of the active material particles. The height of the protruded portions is the height of the active material particle having the greatest height among the active material particles in the cross-sectional SEM image. The average height of the active material particles is a value obtained by dividing the cross-sectional SEM image into columns each having a horizontal width of 1 pixel, determining the heights of the active material particles from the surface of the resin base material in each column, and averaging the heights of the active material particles in all the columns. The average height of the active material particles can be measured by the method described later. When the height of the protruded portions is not more than three times the average height of the active material particles, the arrangement density of the active material particles becomes uniform, enabling sufficient contact between the active material particles and between the active material particles and the solid electrolyte particles.

On the resin base material, regions in which no active material particles are arranged may be present. In these regions, other particles, such as solid electrolyte particles or graphite particles, are arranged.

The average height of the active material particles from the surface of the resin base material is preferably 1 to 50 $\mu$m, and more preferably 2 to 10 $\mu$m. When the average height is smaller than 1 $\mu$m, it becomes difficult to uniformly arrange the active material particles on the resin base material. As a result, smooth electron conduction and ionic conduction are hardly performed. On the other hand, for example, when active material particles (up to 10 $\mu$m) having a small particle diameter are used and their average height is greater than 50 $\mu$m, the active material particles are stacked together over the entire region and arranged in a multilayer form, making it difficult to connect paths in electron conduction and ionic conduction internally. Furthermore, when active material particles having a large particle diameter (exceeding 10 $\mu$m) are used and their average height is greater than 50 $\mu$m, gaps between the particles are increased, making it difficult to smoothly perform electron conduction and ionic conduction. That is, by setting the average height of the active material particles from the surface of the resin base material to 1 to 50 $\mu$m, paths in electron conduction and ionic conduction can be effectively controlled.

The active material particles may be arranged such that a plurality of the active material particles are stacked together on the resin base material. When the active material particles are arranged in a stacked manner, the maximum height of the active material particles can be appropriately adjusted depending on the particle diameter or the like, but is preferably, for example, approximately 1 to 10 times the average particle diameter of the active material particles.

In the observation of a cross section of the particle layer of the electrode base material with a scanning electron microscope (SEM), a difference between the area ratio of the exposed surfaces of the active material particles on the surface of the particle layer in contact with the resin base material and the area ratio of the exposed surfaces of the active material particles on the surface of the particle layer on the side opposite to the side in contact with the resin base material is 1 to 70 area%.

That is, the electrode base material of the present disclosure has a configuration in which the area ratio of the exposed surfaces of the active material on one surface of the particle layer predominantly differs from the area ratio of the exposed surfaces of the active material particles on the other surface thereof. The area ratio of the exposed active material particles on the surfaces of the particle layer and the above-described difference can be calculated by the method described later.

The fact that the difference between the area ratio of the exposed surfaces of the active material particles on the surface of the particle layer in contact with the resin base material and the area ratio of the exposed surfaces of the active material particles on the surface of the particle layer on the side opposite to the side in contact with the resin base material 1 to 70 area% indicates that, in the resin base material, a surface having a large surface area of the active material particles excellent in electron conductivity and a surface having a large surface area of the solid electrolyte particles excellent in ionic conductivity are formed. By controlling the arrangement of the active material particles and the solid electrolyte particles on the resin base material, the area ratio of the exposed surfaces of the active material particles can be controlled. Specifically, the area ratio of the exposed surfaces of the active material particles can be controlled by arranging the active material particles and the solid electrolyte particles by the method described later.

Furthermore, by manufacturing an electrode using an electrode base material in which the active material particles and the solid electrolyte particles are arranged so as to provide the above-described configuration, an electrode can be provided in which the surface area of the active material particles is large on one surface, whereas the surface area of the solid electrolyte particles is large on the other surface.

By manufacturing a secondary battery using an electrode having the above-described configuration and by arranging the surface having a large surface area of the active material particles on the collector side and the surface having a large surface area of the solid electrolyte particles on the electrolyte-layer side, both electron conduction and ionic conduction can be smoothly performed, and the secondary battery in which the internal resistance of the electrode is reduced can be achieved.

The difference between the area ratio of the exposed surfaces of the active material particles on the surface of the particle layer in contact with the resin base material and the area ratio of the exposed surfaces of the active material particles on the surface of the particle layer on the side opposite to the side in contact with the resin base material is 1 to 70 area%. The difference is preferably 5 to 60 area%, and more preferably 10 to 50 area%.

When the above-described difference is at least 1 area%, both electron conduction and ionic conduction can be smoothly performed. Furthermore, when the above-described difference is not more than 70 area%, the active material particles can sufficiently come into contact with each other in the laminating direction when the electrode base materials are laminated to form the electrode, and the efficiency of electron conduction can be maintained at a high level. When the above-described difference is 1 to 70 area%, both ionic conductivity and electron conductivity are improved, and the internal resistance can be further suppressed.

The area ratios of the exposed surfaces of the active material particles on the surfaces of the particle layer are preferably 10 to 80 area%, more preferably 20 to 75 area%, and still more preferably 25 to 70 area%.

In the particle layer, the surface having a larger area ratio of the exposed surfaces of the active material particles may be either the upper-surface side or the lower-surface side of the particle layer. That is, the surface may be either the surface in contact with the resin base material or the surface opposite to the surface in contact with the resin base material.

The area ratio of the exposed surfaces of the active material particles on the surface of the particle layer in contact with the resin base material is preferably larger than the area ratio of the exposed surfaces of the active material particles on the surface of the particle layer on the side opposite to the side in contact with the resin base material. In this case, the above-described difference is a value obtained by subtracting the area ratio of the exposed surfaces of the active material particles on the surface of the particle layer opposite to the side in contact with the resin base material from the area ratio of the exposed surfaces of the active material particles on the surface of the particle layer in contact with the resin base material.

For example, by the method described later, first particles P1 serving as the active material particles and second particles P2 serving as the solid electrolyte particles are arranged on the resin base material serving as the material of an electrode base material. As a result, the active material particles and the solid electrolyte particles can be controlled to be arranged adjacent to each other in the electrode base material.

Furthermore, when the particle layer is viewed from the surface side in contact with the resin base material or from the surface side opposite thereto, the solid electrolyte particles are arranged so as to cover at least a part of surfaces of the active material particles. The formation of the particle layer on the electrode base material, the adjacent arrangement of the active material particles and the solid electrolyte particles, and the arrangement of the solid electrolyte particles so as to cover the surfaces of the active material particles can be confirmed by, for example, SEM observation or the like.

For example, when the electrode base material is observed in cross section, the resin base material, the active material particles, and the solid electrolyte particles are arranged in this order from the lower side of the electrode base material (i.e., from the side where the particle layer is not formed). On the upper-side surface of the electrode base material (i.e., on the side opposite to the resin base material), the solid electrolyte particles are arranged so as to cover at least a part of the surfaces of the active material particles. Furthermore, the solid electrolyte particles are arranged in regions of the resin base material where the active material particles are not arranged.

That is, in the particle layer of the electrode base material, the solid electrolyte particles are densely arranged on either the surface in contact with the resin base material or the surface on the side opposite to the resin base material, and a large amount of the active material particles are arranged on the surface on the side opposite to that surface. With this configuration, electron conduction can be smoothly performed on the surface on which a large amount of the active material particles are arranged, whereas ionic conduction can be smoothly performed on the surface on which the solid electrolyte particles are densely arranged.

Note that, in the present disclosure, an SEM image obtained by imaging a cross-section of the electrode base material is used to identify the active material particles and the solid electrolyte particles present on the resin base material, and the area ratios of the exposed active material particles are then compared between the resin base material side and the opposite side, thereby calculating the difference. A method for identifying the active material particles and the solid electrolyte particles, as well as a method for determining the ratios of the areas, will be described later.

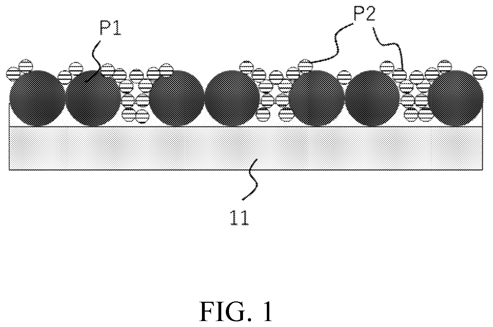

A schematic diagram of the electrode base material according to the present disclosure is illustrated in FIG. 1. For explanatory purposes, the particles P1 and P2 are illustrated as spherical and having the same particle diameter. The particles P1 represent the active material particles, and the particles P2 represent the solid electrolyte particles. The solid electrolyte particles P2 are arranged in regions of the resin base material where the active material particles P1 are not arranged. Furthermore, the solid electrolyte particles P2 are arranged so as to cover a part of the surfaces of the active material particles P1 on the surface of the particle layer on the side opposite to the resin base material. In FIG. 1, a structure is illustrated in which the area of the exposed surfaces of the active material particles is large on the surface of the particle layer on the resin base material side, whereas the area of the exposed surfaces of the active material particles is small on the surface of the particle layer on the side opposite to the resin base material.

The active material particles often have higher electron conductivity than the solid electrolyte particles, and the degree of contact between the active material particles tends to affect electron conductivity within the electrode.

Therefore, when the electrode base materials are laminated by the method described later, contact between the active material particles and the solid electrolyte particles, contact between the active material particles, or contact between the solid electrolyte particles in the laminating direction of the electrode base materials can be sufficiently achieved without being hindered. As a result, high ionic conductivity in the secondary battery is maintained, enabling an improvement in the rate characteristics. Furthermore, because a larger amount of the active material particles can be arranged on the electrode base material, a battery having a high volumetric energy density can be manufactured.

Method for Manufacturing Electrode Base Material

Hereinafter, an example of a method for manufacturing an electrode base material will be described in detail with reference to the drawings. Although a positive-electrode base material using positive electrode active material particles will be described as an example, the method described below can be used to manufacture the electrode base material, regardless of whether the electrode base material is a positive electrode or a negative electrode.

The method for manufacturing the electrode base material includes the following steps.

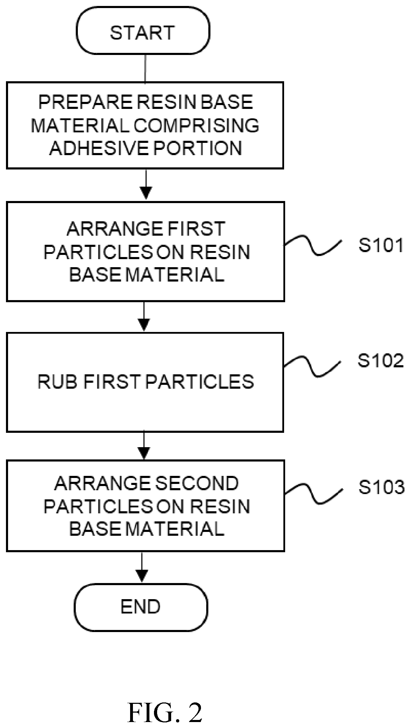

    (1) A preparatory step of preparing a resin base material including an adhesive portion.
    (2) A first step (S101 in FIG. 2) of arranging first particles P1 on a surface of the adhesive portion.
    (3) A second step (S102 in FIG. 2) of rubbing surfaces of the first particles P1 arranged on the surface of the adhesive portion.
    (4) A third step (S103 in FIG. 2) of arranging second particles P2 on the surface of the adhesive portion and on the rubbed surfaces of the active material particles.

Preparatory Step

As the preparatory step, a resin base material comprising an adhesive portion is prepared. Note that in the present disclosure, "comprising an adhesive portion" refers to a state in which the adhesive portion is provided on a part or the entirety of a surface of the resin base material.

The resin base material can be the above-described resin-comprising base material. A method for providing the adhesive portion is not particularly limited, but applying an adhesive to the surface of the resin base material, or the like is preferable.

The adhesive is not particularly limited, and any known material can be used. For example, the adhesive may be an acrylic-based adhesive, a rubber-based adhesive, a silicone-based adhesive, a thermoplastic resin or a photocurable resin whose adhesive force changes due to disturbances such as heat or light, or the like.

(First Step, Second Step, And Third Step)

The first step is a step in which the active material particles are arranged on the surface of the adhesive portion of the resin base material. Furthermore, the second step is a step in which the surfaces of the active material particles arranged on the surface of the adhesive portion are rubbed. The third step is a step in which the second particles P2 are arranged on the surface of the adhesive portion where the active material particles are not arranged and on the rubbed surfaces of the active material particles.

Note that "rubbing" in the present disclosure refers to bringing magnetic particles or a member of a rubbing device described later into contact with the surfaces of the active material particles and then moving the same under pressure, thereby rubbing the surfaces of the active material particles. As will be described later, the rubbing step may be further performed after the arrangement of the second particles P2. In this case, magnetic particles or the above-described member are brought into contact with the surfaces of the active material particles and the second particles P2 and then moved under pressure, so that the surfaces of the active material particles and the second particles P2 can be rubbed. Rubbing is preferably performed using magnetic particles. That is, the rubbing step preferably includes rubbing the surfaces of the active material particles with magnetic particles.

The first particle P1 is, for example, an active material particle. For example, the above-described active material particle can be used as the first particle P1.

The particle diameters of the primary particles constituting the first particle P1 are not particularly limited. However, for example, the cumulative 10% particle diameter (r10) in the volume-based particle size distribution is preferably from 0.1 to 10.0 $\mu$m, and more preferably from 1.0 to 7.0 $\mu$m. Furthermore, the cumulative 50% particle diameter (r50) in the volume-based particle size distribution is preferably from 0.5 to 20.0 $\mu$m, and more preferably from 2.0 to 10.0 $\mu$m. In addition, the cumulative 90% particle diameter (r90) in the volume-based particle size distribution is preferably from 2.0 to 20.0 $\mu$m, and more preferably from 3.0 to 15.0 $\mu$m.

The second particle P2 is a solid electrolyte particle. For example, the above-described solid electrolyte particle can be used as the second particle P2.

The particle diameters of the primary particles constituting the second particle P2 are not particularly limited. For example, the cumulative 10% particle diameter (r10) in the volume-based particle size distribution of the primary particles constituting the second particle P2 is preferably from 0.5 to 10.0 $\mu$m, and more preferably from 1.0 to 7.0 $\mu$m. Furthermore, the cumulative 50% particle diameter (r50) in the volume-based particle size distribution is preferably from 1.0 to 20.0 $\mu$m, and more preferably from 5.0 to 15.0 $\mu$m. Furthermore, the cumulative 90% particle diameter (r90) in the volume-based particle size distribution is preferably from 5.0 to 50.0 $\mu$m, and more preferably from 10.0 to 30.0 $\mu$m.

The ratio between the particle diameter of the primary particles constituting the first particle P1 and the particle diameter of the primary particles constituting the second particle P2 is not particularly limited.

For example, the ratio of the cumulative 50% particle diameter (r50(P1)) in the volume-based particle size distribution of the primary particles constituting the first particle P1 to the cumulative 50% particle diameter (r50(P2)) in the volume-based particle size distribution of the primary particles constituting the second particle P2, {(r50(P1))/(r50(P2))}, is preferably from 0.05 to 20.0, and more preferably from 0.1 to 2.0.

As described above, the first particle P1 is an active material particle. Furthermore, the second particle P2 is a solid electrolyte particle. That is, in the method for manufacturing the electrode base material, the first and third steps can be referred to as steps of arranging the active material particles and the solid electrolyte particles on the surface of the adhesive portion, respectively. By placing the second step between the first step and the third step, a more dense and uniform particle layer can be formed.

Furthermore, additional steps may be provided between the respective steps or after the third step. Examples thereof include a step of arranging third particles P3, a step of rubbing the arranged third particles P3, or the like.

Examples of the third particles P3 include graphite particles, active material particles, and solid electrolyte particles.

In the first and third steps, the particles are arranged on the adhesive portion of the resin base material using particle arrangement apparatuses. Hereinafter, a particle arrangement apparatus 1 and a particle arrangement apparatus 2, which can be used as the particle arrangement apparatuses, will be sequentially described.

Particle Arrangement Apparatus 1

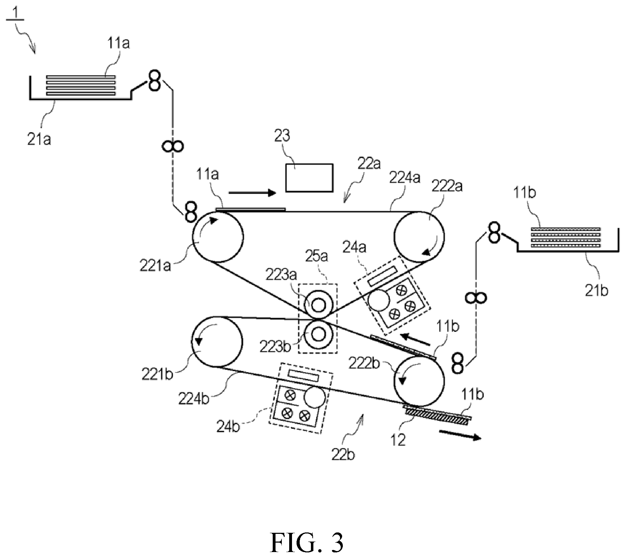

FIG. 3 is a view schematically illustrating the configuration of the particle arrangement apparatus 1.

The particle arrangement apparatus 1 has a first storage container 21a that stores and supplies a first base material 11a, a first belt apparatus 22a that transports the first base material 11a, and a pattern forming apparatus 23 that forms an unevenness pattern on the first base material 11a.

The particle arrangement apparatus 1 has a first filling apparatus 24a that arranges the first particles P1 in the depressed portions of the unevenness pattern formed on the first base material 11a. The particle arrangement apparatus 1 has a second storage container 21b that stores and supplies a second base material 11b and a second belt apparatus 22b that transports the second base material 11b. The particle arrangement apparatus 1 has a transfer unit 25a in which rollers 223 of the first belt apparatus 22a and the second belt apparatus 22b face each other, and in the transfer unit 25a, the first particles P1 are transferred from the first base material 11a to the second base material 11b.

The particle arrangement device 1 has a rubbing device 30 that rubs the surfaces of the first particles P1 transferred onto the first base material 11b.

In addition, the particle arrangement apparatus 1 has a second filling apparatus 24b that arranges the second particles P2 on the non-transfer portions of the second base material 11b. Note that apparatuses of low relevance to the description of the effects of the present case, such as a separation and collection apparatus that separates and collects the first base material 11a after transfer from the first belt apparatus 22a, or various cleaning apparatuses, are not illustrated, and their detailed description will be omitted.

In the particle arrangement apparatus 1, the pattern forming apparatus 23, the first filling apparatus 24a, and the transfer unit 25a correspond to first arrangement means for arranging the first particles P1 on the second base material 11b in a pattern. The rubbing device 30 corresponds to the means for rubbing the first particle. Furthermore, the second filling apparatus 24b corresponds to second arrangement means for arranging the second particles P2 in the regions of the second base material 11b where the first particles P1 are not arranged.

Hereinafter, a method for arranging the particles on the base materials 11 using the particle arrangement apparatus 1 will be described in accordance with the flow of each process.

First, the first base material 11a is supplied from the first storage container 21a to the first belt apparatus 22a by supply means (not illustrated).

When an ultraviolet-curable liquid is applied by the pattern forming apparatus 23 (which will be described later), at least the surface of the first base material 11a is preferably made of a material having high wettability to the ultraviolet-curable liquid. Furthermore, the surface of the first base material 11a is preferably smooth.

The first base material 11a can be a resin sheet such as polyester, which has been subjected to hydrophilic or lipophilic treatment to correspond to the ultraviolet-curable liquid (aqueous or oil-based) to be used. Note that the first base material 11a may also be an individually separated base material such as cut paper, a continuous base material wound in a roll shape such as roll paper, or a continuous base material folded alternately such as continuous paper.

The first belt apparatus 22a transports the supplied first base material 11a to the pattern forming position of the pattern forming apparatus 23. The first belt apparatus 22a has drive rollers 221a and 222a, a pressing roller 223a, and a belt-shaped transport member 224a suspended between these rollers. At this time, the pressing roller 223a rotates in a driven manner.

The transport member 224a is preferably a belt made of resin or metal, and can be, for example, a resin belt made of polyimide. The drive rollers 221a and 222a are preferably metal rollers, and can be, for example, metal rollers made of stainless steel. The pressing roller 223a is preferably a soft roller having an elastic layer on its layer, and can be, for example, a soft roller having an elastic layer made of silicone rubber on the surface of a stainless steel core.

Note that in FIG. 3, the first belt apparatus 22a is used as a transport apparatus that transports the first base material 11a. However, a roller apparatus may be used instead of the belt apparatus. The same applies to the second belt apparatus 22b, which will be described later.

The pattern forming apparatus 23 forms a fine unevenness pattern on the first base material 11a transported to the pattern forming position. Examples of methods for forming the unevenness pattern include a UV imprint method, a thermal imprint method, a UV inkjet method, a printing method, and a laser etching method.

When the pattern forming apparatus 23 forms an unevenness pattern using a UV imprint method, the pattern forming apparatus 23 has application means for applying an ultraviolet-curable liquid onto the first base material 11a. The ultraviolet-curable liquid can be, for example, an ultraviolet-curable resin such as an ultraviolet-curable liquid silicone rubber. Furthermore, the pattern forming apparatus 23 has stamping means for pressing a mold having an unevenness pattern formed on its surface against the ultraviolet-curable liquid on the first base material 11a, and a light source that irradiates the ultraviolet-curable liquid with ultraviolet rays. Typically, the ultraviolet-curable liquid can be ultraviolet-curable liquid silicone rubber (PDMS) or resin, the mold can be a film mold, and the light source can be a UV lamp.

When the first filling apparatus 24a fills the first particles P1 into the depressed portions on the base material 11a using a bearing material S1 that carries the first particles P1, the opening diameter (width) of the depressed portions of the unevenness pattern on the first base material 11a is preferably larger than the cumulative 50% particle diameter (median diameter) on a volume basis of the first particles P1. Furthermore, the opening diameter (width) of the depressed portions is preferably smaller than the average size of the bearing material S1. Here, the opening diameter of the depressed portions of the unevenness pattern is preferably the opening diameter of the depressed portions in the width direction, and more preferably the maximum opening diameter of the depressed portions in the width direction.

The width of the depressed portions can be appropriately adjusted depending on the particle diameters of the first particles P1 and the bearing material S1, and the like. The thickness of the depressed portions is not particularly limited, but is preferably from 0.2 to 30 $\mu$m, and more preferably from 2 to 15 $\mu$m.

By setting the opening diameter of the depressed portions of the unevenness pattern as described above, the first particles P1 can come into contact with the bottoms and side surfaces (typically the bottom surfaces) of the depressed portions of the unevenness pattern. On the other hand, the bearing material S1 cannot come into contact with the bottoms and side surfaces of the depressed portions. As a result, the first particles P1 that come into contact with the bottoms and side surfaces of the depressed portions can be captured by the unevenness pattern, whereas the bearing material S1 cannot be captured by the unevenness pattern. In other words, the first particles P1 can preferably come into contact with the bottoms and side surfaces of the depressed portions, and that the first bearing material S1 cannot come into contact with the bottoms and side surfaces of the depressed portions of the unevenness pattern.

Note that although the pattern forming apparatus 23 forms an unevenness pattern on the first base material 11a, a base material having an unevenness pattern previously formed on its surface may be used as the first base material 11a. Furthermore, the pattern forming apparatus 23 may directly form an unevenness pattern on the surface of the transport member 224a of the first belt apparatus 22a, or the transport member 224a may be a transport member having an unevenness pattern on its surface. In this case, in consideration of durability, it is preferable to use a metal belt, such as stainless steel or aluminum, and to form the unevenness pattern on the surface by a fine processing technique such as laser etching, wet etching, or dry etching.

The first base material 11a having an unevenness pattern on its surface is transported to the filling position of the first filling apparatus 24a by the first belt apparatus 22a.

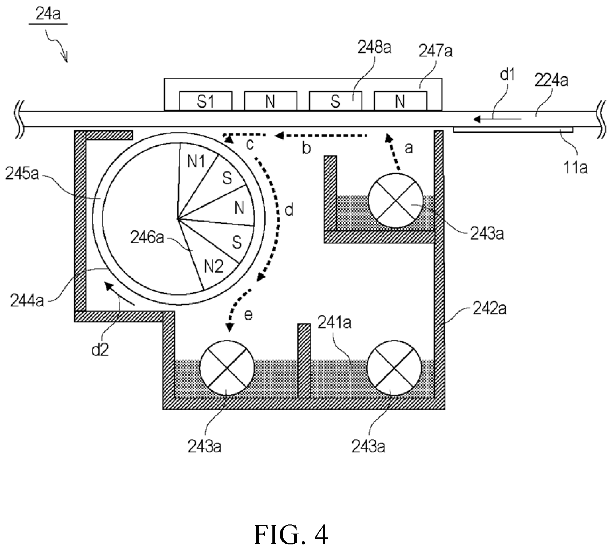

FIG. 4 is a view schematically illustrating the configuration of the filling apparatuses. Hereinafter, the configuration of the first filling apparatus 24a will be described, however, the same applies to the second filling apparatus 24b.

The first filling apparatus 24a has a filling container 242a that accommodates a filler 241a, an agitation screw member 243a that agitates and transports the filler 241a, a collection member 244a that collects the filler, and a magnetic member 247a.

The filler 241a has the first particles P1 and the bearing material S1 that bears the first particles P1. The filler 241a is a mixture of a plurality of powders comprising a powder composed of a plurality of the first particles P1 and a powder composed of a plurality of the bearing materials S1. The filler 241a accommodated in the filling container 242a is agitated by the agitation screw member 243a and sufficiently mixed as it is transported. As a result, the first particles P1 are borne on the surface of the bearing material S1. Examples of the forces acting between the particles during bearing include Van der Waals forces or liquid bridge forces, in addition to electrostatic forces caused by frictional charging or the like.

The bearing material S1 is composed of magnetic particles. The bearing material S1 is preferably composed of particles obtained by coating the surfaces of resin particles, in which ferrite core particles and a magnetic substance are dispersed, with a resin composition. For example, a standard carrier, which is composed of magnetic particles (standard carrier P02 produced by The Imaging Society of Japan), or the like can be used. The particle diameter and material of bearing material S1 are appropriately selected in accordance with the particle diameter and material of the first particle P1. As a result, the first particle P1 can be stably borne. Furthermore, even when the first particle P1 tends to agglomerate due to its small particle diameter or the like, agitation and transport together with the bearing material S1 serves to disperse agglomeration.

The particle diameter of the bearing material S1 can be appropriately adjusted depending on the sizes (area, width, and depth) of the depressed portions. For example, the cumulative 50% particle diameter (median diameter) on a volume basis is preferably from 50 to 100 $\mu$m.

The collection member 244a has a roller 245a rotatable in the direction indicated by arrow d2 in the figure, and a magnet 246a arranged inside the roller 245a and fixed to the filling container 242a. Furthermore, the magnetic member 247a is arranged facing the filling container 242a via the transport member 224a and has a magnet 248a therein.

The magnet 246a has a plurality of N and S poles alternately arranged along the rotational direction of the collection member 244a. The magnet 248a has a plurality of N and S poles alternately arranged along the transport direction of the transport member 224a. Furthermore, the magnet 246a has a magnetic pole of opposite polarity (N1 pole in FIG. 4) at the position that faces closest to the most downstream magnetic pole (S1 pole in FIG. 4) of the magnet 248a, and an N2 pole that has the same polarity as the N1 pole is arranged at the most downstream position.

Note that the magnets 246a and 248a may be composed of a plurality of magnets, and the types of magnets constituting the magnets 246a and 248a are not particularly limited. For example, a rare-earth magnet such as a ferrite magnet, a neodymium magnet, or a samarium-cobalt magnet, a permanent magnet such as a plastic magnet, or means for generating a magnetic field such as an electromagnet can be used. Note that the magnet 248a may be configured to be movable in the transport direction of the first base material 11a or in the opposite direction.

Note that, on the upstream or downstream side of the collection member 244a in the transport direction of the transport member 224a, a regulating member that regulates the filler 241a on the first base material 11a or a collection member that collects again the filler 241a not collected by the collection member 244a may be provided. The collection member that collects the filler 241a again can be, in addition to a member similar to the collection member 244a, a collection member that collects by air blow using a simple member such as a fixed magnet or a regulating member, or the like.

Next, the process of filling the first particles P1 into the depressed portions on the first base material 11a by the first filling apparatus 24a will be described with reference to FIGS. 4 to 6.

As the first transport member 224a moves in the direction indicated by solid arrow d1 in FIG. 4, the first base material 11a, which is borne and transported by the first transport member 224a, is transported to the filling position of the first filling apparatus 24a.

The filler 241a is transported by the agitation screw member 243a and supplied onto the first base material 11a (as indicated by dotted line a in FIG. 4). At this time, a magnetic field is formed by the magnetic member 247a and the collection member 244a, and the filler 241a including the bearing material S1, which is composed of magnetic particles, forms a plurality of magnetic brushes on the first base material 11a under the magnetic field. The filler 241a supplied onto the first base material 11a is transported on the first base material 11a while forming the magnetic brushes as the first base material 11a moves (as indicated by dotted line b in FIG. 4).

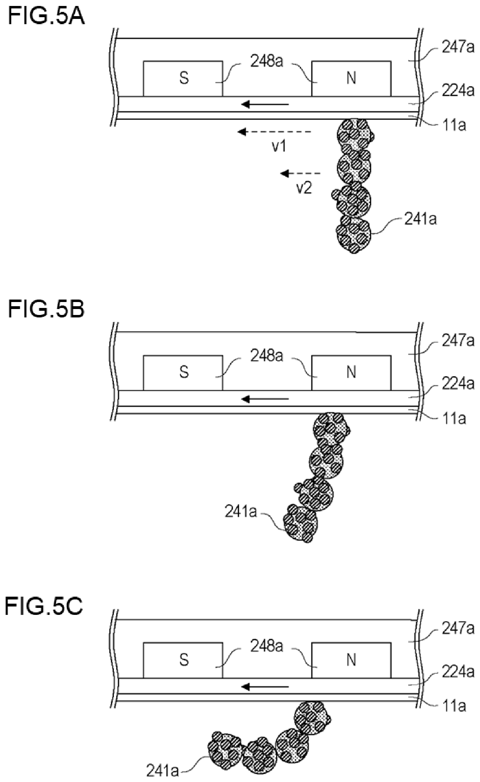

FIGS. 5A, 5B and 5C are schematic views of the filler 241a transported on the first base material 11a. For explanatory purposes, fillers 241a other than the filler forming a single magnetic brush are omitted in the figures. As described above, the filler 241a on the first base material 11a forms a magnetic spike along the magnetic field lines of the formed magnetic field. As the first base material 11a moves, the filler 241a is transported while changing the shape of the magnetic spike as illustrated in FIGS. 5A, 5B and 5C. At this time, a particularly strong magnetic force acts in the vicinity of the magnet 248a. Therefore, a transport speed v2 of the filler 241a becomes smaller than a movement speed v1 of the first base material 11a when the filler 241a moves away from the magnetic pole, and becomes larger than the movement speed v1 when the filler 241a moves closer to the magnetic pole. That is, the filler 241a on the first base material 11a has a nonzero relative speed with respect to the first base material 11a.

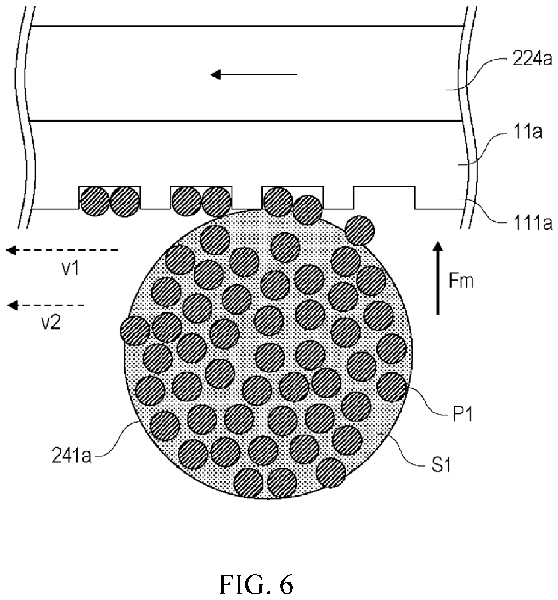

FIG. 6 is an enlarged view illustrating the vicinity of a surface of the first base material 11a in FIGS. 5A to 5C. Although not illustrated in FIGS. 5A to 5C, an unevenness pattern 111a is formed on the first base material 11a as illustrated in FIG. 6. The unevenness pattern can be formed as a desired pattern, such as a honeycomb pattern or a line pattern.

The filler 241a comes into contact with the unevenness pattern 111a and is transported together with the first base material 11a, maintaining a nonzero relative speed with respect to the first base material 11a, while receiving a magnetic force (as indicated by solid line Fm in the figure) in a direction perpendicular to the surface of the first base material 11a. As a result, the first particles P1 borne by the bearing material S1 are transported while being rubbed against the unevenness pattern 111a on the surface of the first base material 11a.

At this time, the particle diameter of the first particles P1 is smaller than the opening diameter of the depressed portions of the unevenness pattern 111a, whereas the particle diameter of the first bearing material S1 is larger than the opening diameter of the depressed portions. Therefore, the first particles P1 can come into contact with the bottom surfaces (bottoms) and side surfaces of the depressed portions of the unevenness pattern 111a, while the bearing material S1 cannot. That is, only the first particles P1 of the filler 241a selectively come into contact with the bottom surfaces and side surfaces of the depressed portions.

The first particles P1 that have come into contact with the depressed portions are strongly restrained by a physical restraining force due to the structure of the unevenness pattern 111a, or by an electrostatic attachment force or a non-electrostatic attachment force such as an adhesive force with respect to the structural materials constituting the first base material 11a and the unevenness pattern 111a, and are separated from the bearing material S1. Note that in FIG. 6, the first particles P1 are borne on the surface of the bearing material S1 for explanatory purposes. However, when the filler 241a is agitated, supplied, or transported, some of the first particles P1 may not be borne on the bearing material S1.

As illustrated in FIG. 4, the collection member 244a is arranged downstream of the magnetic member 247a with a gap relative to the first transport member 224a. As the first base material 11a moves, the filler 241a, which has been transported to the vicinity of the most downstream magnetic pole (S1 pole) of the magnet 248a, is transferred from the first base material 11a to the collection member 244a under the influence of the magnetic field formed by the magnet 246a, and is collected (as indicated by dotted line c in FIG. 4).

As described above, during the transport process (as indicated by dotted lines a, b, and c in FIG. 4), the depressed portions of the unevenness pattern 111a on the surface of the first base material 11a sufficiently come into contact with the fillers 241a. Therefore, after the filler 241a has been collected by the collection member 244a, the first particles P1 are selectively and densely arranged in the depressed portions of the unevenness pattern 111a.

Note that in FIGS. 5A to 5C and FIG. 6, the first particles P1 are illustrated as having the same particle diameter, but they actually has a particle size distribution and may form agglomerated secondary particles depending on the material. Furthermore, the first particles P1 may not have the spherical shape illustrated in the figures. Even in such a case, only particles capable of coming into contact with the depressed portions of the unevenness pattern 111a are selectively and densely filled, therefore, coarse powder, secondary particles, and the like, which may have an adverse effect on the particle arrangement step, tend to be removed.

As described above, the filling amount of the first particles P1 in the depressed portions of the unevenness pattern 111a can be controlled by the sizes (area, width, and height) of the unevenness pattern and the particle diameter of the first particles P1. Specifically, the area of the depressed portions substantially corresponds to a substantially filling area, and the layer thickness of the filled first particles P1 is determined by the height of the protruded portions.

The pitch of the protruded portions is not particularly limited, but is, for example, preferably from 1.0 to 20 $\mu$m, and more preferably from 2.0 to 15 $\mu$m.

The height of the protruded portions is not particularly limited, but is, for example, preferably from 0.1 to 20.0 $\mu$m, and more preferably from 1.0 to 10.0 $\mu$m.

The area ratio of the depressed portions (the proportion of the depressed portions to the area of the unevenness pattern) is not particularly limited, but is, for example, preferably at least 50%, and more preferably at least 70%.

For example, in order to obtain a thin layer (single layer) having an area ratio of 50% relative to the area of the base material, the area ratio of the depressed portions (the ratio of the area of the depressed portions to the total area of the unevenness pattern) may be controlled to 50%, and the depth of the depressed portions may be controlled to be not more than the particle diameter of the first particle P1. At this time, the opening width of the depressed portions is set to be larger than the median diameter of the first particle P1 and smaller than the average size (here, average particle diameter) of the bearing material S1.

Note that the first particle P1 may have a broad particle size distribution, whereas the bearing material S1 preferably has a narrow particle size distribution, and more preferably is monodisperse. This makes it easier to prevent the bearing material S1 from coming into contact with the bottoms (or bottom surfaces) and the side surfaces of the depressed portions. If the bearing material S1 can come into contact with the bottoms and side surfaces of the depressed portions, there is a risk that the bearing material S1 may also be restrained and filled within the depressed portions.

In addition, the opening width of the depressed portions of the unevenness pattern 111a is preferably smaller than four times the particle diameter of the first particle P1. By making the opening width smaller than four times the particle diameter of the first particle P1, the probability that the first particles P1 come into contact with two points, i.e., the bottom surfaces and side surfaces of the depressed portions of the unevenness pattern 111a can be increased. As described above, the first particles P1, which come into contact with the depressed portions of the unevenness pattern 111a at multiple points, are strongly restrained by the unevenness pattern 111a, therefore, the efficiency of filling the first particles P1 into the unevenness pattern 111a can be improved.

Note that the same applies to the particle diameter of the second particle P2, which will be described later, and to the size of the depressed portions of an unevenness pattern formed on the second base material by the first particles P1. Furthermore, when brush fibers are used as the bearing material, the "average particle diameter of the bearing material" in the above description refers to the "average fiber diameter of the bearing material."

The filler 241a collected by the collection member 244a is transported by the roller 244a, which serves as a rotating collection member (as indicated by dotted line d in FIG. 4). The filler 241a transported by the roller 244a falls into the filling container 242a under the influence of the magnetic field generated by two adjacent magnetic poles of the same polarity (N1 and N2) that repel each other, and the gravity (as indicated by dotted line e in FIG. 4). Thereafter, the filler 241a is agitated and transported again by the agitation screw member 243a, and this process is repeated.

The mass ratio of the first particles P1 to the bearing material S1 in the filler 241a inside the filling container 242a is determined by an inductance sensor that performs measurement using magnetic permeability, a patch density sensor that performs measurement on the basis of reflection density on a base material, and the like, which are commonly used in electrophotographic apparatuses. Then, if necessary, at least one of the first particles P1 and the bearing material S1 is replenished by replenishment means (not illustrated). As a result, stable filling is possible over a long period of time.

The mass% of the first particles P1 in the filler 241a (the proportion of the mass of the first particles P1 to the total mass of the filler 241a) is expressed by the following Equation (1) using a coverage ratio S1, which represents the proportion of the borne first particles P1 to the surface area of the magnetic particles (bearing material). The coverage ratio S1 indicates the proportion of the total of the cross-sectional areas of the first particles P1 to the surface areas of the magnetic particles (bearing material).

$$\text{Mass\% of the first particles P1 in the filler 241a} = \frac{400 \times \rho_{P1} \times r_{P1} \times S1}{100 \times \rho_c \times r_c + 4 \times \rho_{P1} \times r_{P1} \times S1} \qquad \text{Equation (1)}$$

(The descriptions in Equation (1) indicate the following respectively. $\rho_{P1}$ : the true density of the first particle P1, $r_{P1}$ : the particle diameter (r50) of the first particle P1, $\rho_c$ : the true density of the magnetic particle, $r_c$ : the particle diameter (r50) of the magnetic particle, S1 : the coverage ratio of the first particles P1 relative to the surface areas of the magnetic particles)

The mass% of the first particles P1 in the filler 241a is not particularly limited, but is preferably from 5 to 40 mass%, and more preferably from 10 to 30 mass%.

Furthermore, the coverage ratio S1 in Equation (1) is preferably adjusted to 30 to 200 area%, and more preferably to 50 to 100 area%.

The particle diameters (r50) of the first particle P1 and the magnetic particle (bearing material) can be determined by laser diffraction/scattering particle diameter distribution measurement. Furthermore, the true densities of the first particle P1 and the magnetic particle (bearing material) can be determined by the pycnometer method.

Note that although the filling apparatus has been described in which the particle material is filled into the depressed portions by forming so-called magnetic spikes with the magnetic particles serving as the bearing material, the filling apparatus is not limited to thereto. The bearing material can be brush fibers. Alternatively, the bearing material can be an elastic material having at least its surface made of an elastic body.

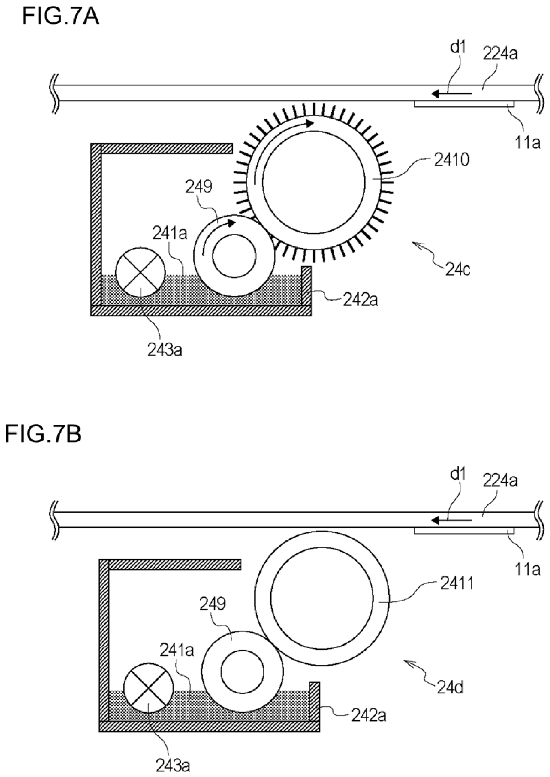

FIG. 7A is a view schematically illustrating the structure of a filling apparatus 24c in which brush fibers are used as the bearing material.

The filling apparatus 24c has a roller 2410 having brush fibers on its surface. The roller 2410 is a so-called brush roller having brush fibers planted on its surface. The fibers constituting the brush of the roller 2410 can be, for example, nylon, rayon, acrylic, vinylon, polyester, vinyl chloride, or the like. For the purpose of adjusting the charging property and rigidity, the fiber surfaces may be subjected to surface treatment.

The filling apparatus 24c has a supply member that supplies the filler 241a to the roller 2410. Note that the filler 241a comprises powder including the first particles P1 and is accommodated in the filling container 242a. Furthermore, in this example, the filler 241a does not comprise the bearing material S1, which is composed of magnetic particles. The filler 241a is agitated and transported by the agitation screw member 243a and supplied to the supply member 249.

The supply member 249 is a member that supplies the filler 241a to the roller 2410, and its structure is not particularly limited. The supply member 249 can be, for example, a roller having at least its surface made of a porous foam material having elasticity. Typically, an elastic sponge roller having a foamed skeleton structure and a relatively low-hardness polyurethane foam formed on the core can be used. Note that, in addition to urethane, the foaming material can be made of various rubber materials such as nitrile rubber, silicone rubber, acrylic rubber, hydrin rubber, and ethylenepropylene rubber.

The filler 241a thus supplied is filled into the foaming material on the surface of the supply member 249 and conveyed to a supply unit where the filler 241a comes into contact with the roller 2410. At the supply unit, the filler 241a filled into the foaming material is charged through contact with the brush fibers of roller 2410 and is borne by the brush fibers of roller 2410. In addition, the supply member 249 may also have the function of separating the filler 241a remaining on the roller 2410 and refreshing the roller 2410. The filler 241a supplied to the roller 2410 comes into contact with the first base material 11a as the brush fibers move.

At this time, the first particles P1 in the filler 241a are configured to be capable of coming into contact with the bottom surfaces and side surfaces of the depressed portions of the unevenness pattern 111a on the surface of the first base material 11a, while the brush fibers cannot. That is, the fiber diameter of the brush fibers is set to be larger than the opening width of the depressed portions of the unevenness pattern 111a. Note that the diameter of the brush fibers can be measured from an image of the brush fibers obtained through a glass placed on the surface of the roller 2410 using an optical microscope. At this time, the fiber diameters of approximately 100 brush fibers are measured, the fiber diameter distribution is measured, and the average diameter is calculated.

As the transport member 224a moves and the roller 2410 rotates, the brush fibers of the roller 2410 are rubbed against the surface of the first base material 11a. As a result, the first particles borne by the brush fibers are densely arranged in the depressed portions of the unevenness pattern 111a on the surface of the first base material 11a.

FIG. 7B is a view schematically illustrating the configuration of a filling apparatus 24d in which an elastic material is used as the bearing material.

The filling apparatus 24d has the same configuration as that of the filling apparatus 24c, except that a roller 2411 having an elastic material is used instead of the roller 2410 having brush fibers. The roller 2411 is a roller having an elastic layer formed on its surface.

The elastic layer is made of an elastic material such as a rubber material including silicone rubber, acrylic rubber, nitrile rubber, urethane rubber, or fluorocarbon rubber. The surface shape of the elastic layer may be controlled by adding fine particles such as spherical resin to the elastic layer.

When the elastic layer has protruded portions on its surface, the size of the protruded portions of the elastic layer is set to be larger than that of the depressed portions of the unevenness pattern 111a. The size of the protruded portions of the elastic layer can be measured in the same manner as the fiber diameter of the brush fibers described above.

As the transport member 224a moves and the roller 2411 rotates, the elastic material on the surface of the roller 2411 is rubbed against the surface of the first base material 11a. As a result, the first particles borne by the elastic material are densely arranged in the depressed portions of the unevenness pattern 111a on the surface of the first base material 11a.

By using brush fibers or an elastic material as the bearing material as illustrated in FIGS. 7A and 7B, it is unnecessary to include magnetic particles in the filler. Furthermore, the configuration of the filling apparatus can be simplified. On the other hand, when magnetic particles are used as the bearing material as illustrated in FIG. 4, the degree of freedom in determining the size and shape of the bearing material is higher than when brush fibers or an elastic material are used. Furthermore, when magnetic particles are used, the degree of freedom in the movement of the bearing material on the base material is high.

For these reasons, when magnetic particles are used as the bearing material, particles such as the first particles P1 can be more efficiently supplied onto the base material and more efficiently filled into the depressed portions on the base material. Furthermore, when a magnetic material is used as the bearing material, the bearing material can be replenished or replaced without interrupting the process even if the bearing material deteriorates in the middle of the process.

According to the method in which the particles are filled into the depressed portions by rubbing the bearing material having the particles borne thereon, a larger amount of dispersed particles can be supplied into the depressed portions compared with a method in which the particles are filled using a regulating member such as a blade, and the filling can be performed stably and densely. The advantage of this method becomes conspicuous as the particle diameter of the particles to be filled decreases, because the particles tend to agglomerate.

The first base material 11a, in which the depressed portions of the unevenness pattern 111a have been filled with the first particles P1 by the first filling apparatus 24a, is transported to the transfer unit 25a by the first belt apparatus 22a.

Here, as illustrated in FIG. 4, the second belt apparatus 22b has drive rollers 221b and 222b, a pressing roller 223b, and a belt-shaped transport member 224b suspended between these rollers, similar to the first belt apparatus 22a. At this time, the pressing roller 223b rotates in a driven manner. In the transfer unit 25a, the pressing roller 223a of the first belt apparatus 22a and the pressing roller 223b of the second belt apparatus 22b face each other.

The second base material 11b is supplied from the second storage container 21b to the second belt apparatus 22b and transported in the direction indicated by arrow in FIG. 4. The second base material 11b thus supplied is transported in synchronization with the transport timing of the first base material 11a to the transfer unit 25a. In the transfer unit 25a, the first particles P1 filled into the first base material 11a are transferred to the second base material 11b.

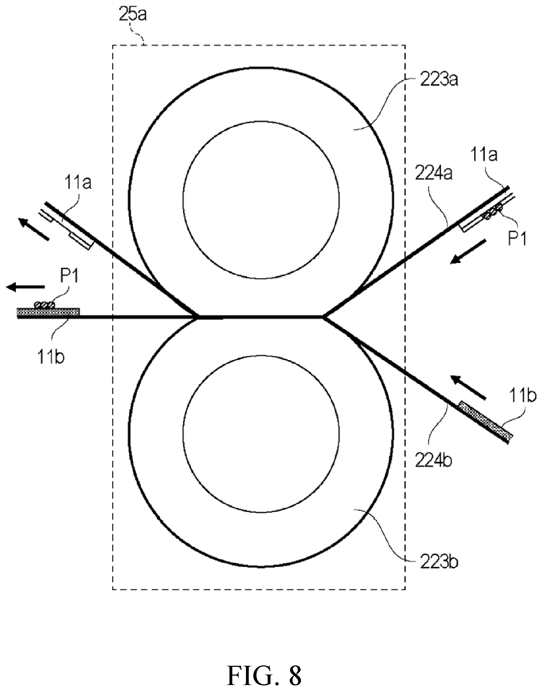

That is, the first base material 11a can be regarded as a transfer base material used to transfer the first particles P1 to the second base material 11b. Furthermore, the unevenness pattern formed on the surface of the first base material 11a can be regarded as a transfer unevenness pattern. Hereinafter, this transfer process will be described with reference to FIG. 8.

FIG. 8 is a view schematically illustrating the configuration of the transfer unit 25a. The transfer unit 25a includes the pressing roller 223a and the transport member 224a of the first belt apparatus 22a, and the pressing roller 223b and the transport member 224b of the second belt apparatus 22b. As described above, the pressing rollers 223a and 223b rotate in a driven manner and are in contact with each other through the transport members 224a and 224b. At least one of the pressing roller 223a and the pressing roller 223b is a soft roller having an elastic layer on its surface, and a nip portion is formed at the location where the two rollers are in contact with each other.

The first base material 11a, which has been filled with the first particles P1 by the first filling apparatus 24a, and the second base material 11b are transported at substantially the same speed by the respective transport members (224a and 224b), and enter the nip portion formed by the contact between the pressing rollers 223a and 223b. At the nip portion, the first particles P1 on the first base material 11a come into contact with the second base material 11b and are transferred to the second base material 11b.

The second base material 11b is a base material in which the attachment force to the first particles P1 is larger than that of first base material 11a to first particles P1. In other words, the attachment force of the first particles P1 to the second base material 11b is larger than that of the first particles P1 to the first base material 11a. As a result, at the nip portion, the first particles P1 on the first base material 11a are transferred to the second base material 11b.

The material of the second base material 11b is not particularly limited, and the same material as that of the first base material 11a can be used. Note that, similarly to the first base material 11a, the second base material 11b may be an individually separated base material, such as cut paper, a continuous base material wound in a roll shape, such as roll paper, or a continuous base material folded alternately, such as continuous paper.

In order to transfer the first particles P1 that come into contact with the second base material 11b, the second base material 11b is preferably subjected to surface treatment to enhance an attachment force. For example, the second base material 11b preferably has, on its surface, an adhesive portion to which an adhesive is applied. As a preparatory step of preparing a resin base material including an adhesive portion, the second base material 11b is, for example, prepared. The thickness of the second base material is not particularly limited, but is preferably, for example, from 1 to 10 $\mu$m. Furthermore, the thickness of the adhesive portion is not particularly limited, but is preferably, for example, 0.1 $\mu$m or more, and more preferably 0.5 $\mu$m or more.

In addition, the rear surface (the surface to which the first particles P1 have not been transferred) of the second base material 11b also preferably has an adhesive portion to which the same adhesive as that on the front surface is applied, and that the surface of the adhesive portion is preferably coated by a protective film or the like. In this manner, displacement between the base materials can be prevented during their lamination, which will be described later, and active material particles and solid electrolyte particles between the base materials are sandwiched between the upper and lower surfaces (in the laminating direction) and firmly fixed. As a result, during lamination of the electrode base materials, storage of the laminates, heat treatment, or pressing, particle movement is suppressed, enabling a desired electrode to be formed.

The adhesive is not particularly limited, and the above-described adhesives may be used. Furthermore, the particle arrangement apparatus 1 may also have application means, such as a dispenser, an inkjet head, a spin coater, or a bar coater for applying the adhesive to the surface of the second base material 11b during transport.

The type and applied amount of the adhesive are appropriately adjusted depending on the shape and material of the unevenness pattern to be used, and the particle diameters, materials, and the like of the first particles P1 and the second particles P2, however, the adhesive force of the adhesive is preferably larger than that of the unevenness pattern 111a. Comparison of adhesive forces can be performed by typical methods using a nanoindenter.

At the nip portion, the first particles P1 are restrained by the attachment force generated between the first particles P1 and the second base material 11b. When both the transport members 224a and 224b separate from each other after passing through the nip portion, the first particles P1 that were on the first base material 11a are transferred to the second base material 11b.

On the second base material 11b that has passed through the transfer unit 25a, the first particles P1 are arranged, whereas in regions of the second base material 11b where the first particles P1 are not arranged, the adhesive portion is exposed.

In the second step, the first particles P1 arranged on the resin base material are rubbed with magnetic particles having a particle diameter larger than the widths of the regions of the resin base material where the adhesive portion is exposed.

The second base material 11b, onto which the first particles P1 have been transferred, is transported to the rubbing device 30 by the transport member 224b. The rubbing device 24 has the same configuration and function as those of the first filling device 24a, except that a filler having a bearing material S3 is accommodated in the filling container 242a instead of the filler 241a having the first particles P1 and the bearing material S1.

The rubbing device 30 rubs the first particles P1 arranged on the resin base material by the same mechanism as that used when filling the first particles P1, using the bearing material S3, which is a magnetic particle to which no particles are attached. In the above-described filling device, a magnetic material is used as a filler and brought into contact with the surface of the resin base material where the first particles P1 are arranged, thereby enabling the surfaces of the first particles P1 to rubbed.

The bearing material S3 is not particularly limited as long as it is composed of magnetic particles, but is preferably the same as the above-described bearing material S1. For example, a standard carrier, which is composed of magnetic particles (standard carrier P02 produced by The Imaging Society of Japan), or the like can be used. The particle diameter and material of the bearing material S3 are appropriately selected in accordance with the particle diameter and material of the first particle P1.

The particle diameter of the bearing material S3 is preferably larger than the widths of regions of the resin base material where the active material particles are not arranged. For example, the cumulative 50% particle diameter (median diameter) on a volume basis is preferably 50 to 100 $\mu$m. As a result, because the bearing material S3 has a particle diameter that prevents it from coming into contact with the adhesive portion exposed on the resin base material, only the first particles P1 arranged on the base material can be rubbed.

By rubbing the surfaces of the first particles P1 transferred onto the base material 11b, the first particles P1 can be more strongly fixed to the adhesive portion on the base material 11b, thereby preventing chipping and displacement of the particles in a subsequent step. Furthermore, the filling density of the transferred and imparted first particles P1 increases, and an electrode base material in which the particles are extremely densely filled can be achieved after the subsequently imparted second particles P2 are imparted. In addition, by rubbing the first particles P1, the second particles P2 can be easily placed on the surfaces of the first particles P1. That is, rubbing causes the surfaces of the first particles P1 to become gently protruded, thereby increasing the areas that come into contact with the second particles P2. Furthermore, the second particles P2 arranged in a step described later are arranged at approximately the same height as the uppermost surfaces of the first particles P1. Accordingly, by rubbing the first particles P1, the second particles P2 can be more easily placed on the first particles P1.

As a result, it becomes easy to provide a configuration in which, on one surface of the particle layer, the second particles P2 cover at least a part of the surfaces of the first particles P1, thereby increasing the area ratio of the second particles P2. That is, it becomes easy to provide a configuration in which a difference is produced between the area ratio of the exposed surfaces of the active material particles on one surface of the particle layer and the area ratio of the exposed surfaces of the active material particles on the other surface of the particle layer.

The rubbed second base material 11b is transported to the filling position of the second filling device 24b by the transport member 224b.

The second filling apparatus 24b has the same configuration and function as those of the first filling apparatus 24a, except that a filler 241b having the second particles P2 and a bearing material S2 is accommodated in the filling container 242a instead of the filler 241a having the first particles P1 and the bearing material S1.

The second filling apparatus 24b fills the second particles P2 into the regions of the second base material 11b where the first particles P1 are not arranged. As described above, the first particles P1 are arranged on the second base material 11b that has passed through the transfer unit 25a. However, in the regions where the first particles P1 are not arranged, the adhesive portion is exposed, that is, depressed portions are formed. The second filling apparatus 24b fills the second particles P2 into the depressed portions (adhesive portion) using the same process as that of the first filling apparatus 24a.

As described above, the second particles P2, which can be filled into the void regions on the second base material 11b where the first particles P1 are not arranged, are selectively filled, thereby improving the coverage ratio of the base material with the particles.

The second particle P2 preferably has a median diameter not more than the opening width of the void regions between the first particles P1. Note that although a case in which magnetic particles are used as the bearing material is described here, brush fibers or an elastic material may also be used as the bearing material, similarly to the first filling apparatus 24a.

The filler 241b has the second particles P2 and the bearing material S2 that bears the second particles P2. The filler 241b is a mixture of a plurality of powders comprising a powder composed of a plurality of the second particles P2 and a powder composed of a plurality of the bearing materials S2. The bearing material S2 may be the same as or different from the bearing material S1. The bearing material S2 is appropriately selected in accordance with the particle diameter and material of the second particle P2 and the opening width of the above-described void regions.

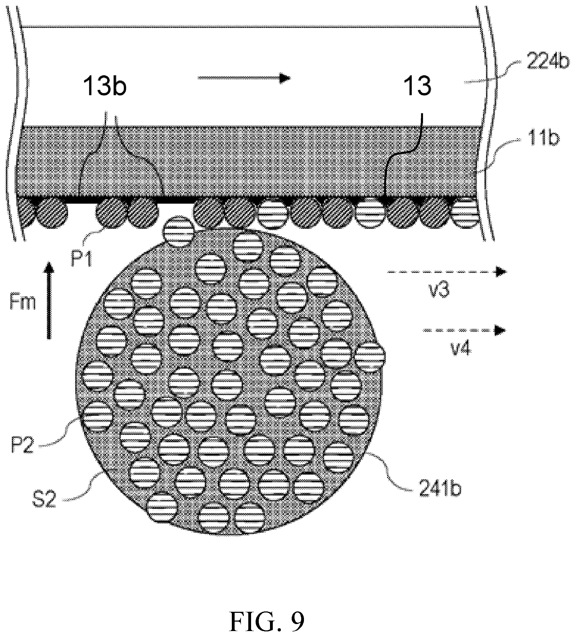

FIG. 9 is an enlarged view illustrating the vicinity of the surface of the second base material 11b during the filling process by the second filling apparatus 24b. An unevenness pattern, which has protruded portions formed by arranging the first particles P1 and depressed portions in which the first particles P1 are not arranged, is formed on the second base material 11b. At the depressed portions on the second base material 11b where the first particles P1 are not arranged, the adhesive portion 13b is exposed. In the filling process by the second filling apparatus 24b, the second particles P2 are positioned on the adhesive portion 13b on the surface of the second base material 11b. After the filling process by the second filling apparatus 24b, the first particles P1 and the second particles P2 are arranged adjacent to each other on the surface of the adhesive portion of the second base material 11b. That is, by arranging the second particles P2 in the regions on the second base material 11b where the first particles P1 are not arranged, the first particles P1 and the second particles P2 can be arranged adjacent to each other. Furthermore, the second particles P2 may not necessarily be arranged next to all the first particles P1, and the first particles P1 or the second particles P2 may be adjacent to each other.

The filler 241b comes into contact with the unevenness pattern and is transported together with the second base material 11b, maintaining a nonzero relative speed with respect to the second base material 11b, while receiving a magnetic force (as indicated by solid line Fm in the figure) in a direction perpendicular to the surface of the second base material 11b. As a result, the second particles P2 borne by the bearing material S2 are transported while being rubbed against the unevenness pattern on the surface of the second base material 11b.

The mass% of the second particles P2 in the filler 241b (the proportion of the mass of the second particles P2 to the total mass of the filler 241b) is expressed by the following Equation (2) using a coverage ratio S2, which represents the proportion of the borne second particles P2 to the surface area of the magnetic particles (bearing material). The coverage ratio S2 indicates the proportion of the total of the cross-sectional areas of the second particles P2 to the surface area of the magnetic particles (bearing material).

$$\text{Mass\% of the second particles P2 in the filler 241b} = (400 \times \rho_{P2} \times r_{P2} \times S2)/(100 \times \rho_c \times r_c + 4 \times \rho_{P2} \times r_{P2} \times S2) \qquad \text{Equation (2)}$$

(The descriptions in Equation (2) indicate the following respectively. $\rho_{P2}$: the true density of the second particle P2, $r_{P2}$: the particle diameter (r50) of the second particle P2, $\rho_c$: the true density of the magnetic particle, $r_c$: the particle diameter (r50) of the magnetic particle, S2: the coverage ratio of the second particles P2 relative to the surface areas of the magnetic particles)

The mass% of the second particles P2 in the filler 241b is not particularly limited, but is preferably from 5 to 40 mass%, and more preferably from 10 to 30 mass%.

Furthermore, the coverage ratio S2 in Equation (2) is preferably adjusted to 30 to 200 area%, and more preferably to 50 to 100 area%.

The particle diameters (r50) of the second particle P2 and the magnetic particle (bearing material) can be determined by laser diffraction/scattering particle diameter distribution measurement. Furthermore, the true densities of the second particle P2 and the magnetic particle (bearing material) can be determined by the pycnometer method.

At this time, the opening width of the depressed portions of the unevenness pattern is set to a size that allows the second particles P2 to come into contact with the depressed portions but does not allow the bearing material S2 to come into contact with the depressed portions. That is, the opening diameter of the depressed portions of the unevenness pattern on the second base material 11b is preferably larger than the cumulative 50% particle diameter (median diameter) of the second particles P2 on a volume basis. Furthermore, the opening diameter of the depressed portions is preferably smaller than the average size of the bearing material S2. Here, the opening diameter of the depressed portions of the unevenness pattern is preferably the opening diameter of the depressed portions in the width direction, and more preferably the maximum opening diameter of the depressed portions in the width direction. As a result, only the second particles P2 of the filler 241b can selectively come into contact with the depressed portions.

The second particles P2 that have come into contact with the depressed portions are strongly restrained by a physical restraining force due to the structure of the unevenness pattern, or by an electrostatic attachment force or an adhesive force with respect to the structural materials (here, the first particles P1) constituting the second base material 11b and the unevenness pattern, and are separated from the bearing material S2. Note that in FIG. 9, the second particles P2 are borne on the surface of the bearing material S2 for explanatory purposes, however, when the filler 241b is agitated, supplied, or transported, some of the second particles P2 may not be borne on the bearing material S2.

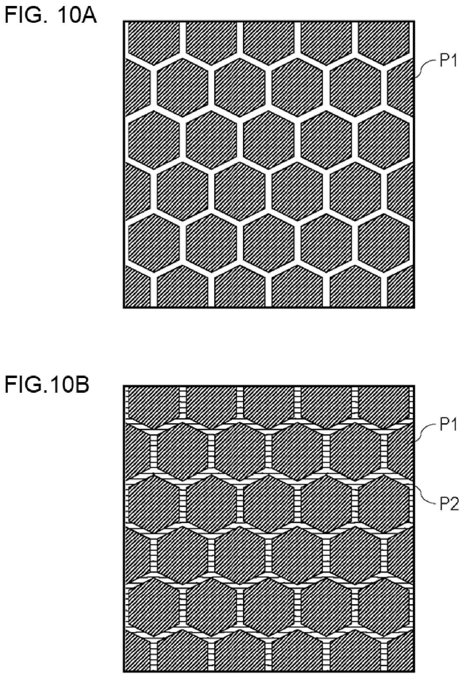

FIG. 10A is a view schematically illustrating the second base material 11b after the first particles P1 have been transferred by the transfer unit 25a, and is a view of the second base material 11b as viewed from a direction perpendicular to its surface. As illustrated in FIG. 10A, a honeycomb pattern is formed on the second base material 11b, in which the arrangement regions where the first particles P1 are arranged in a regular hexagonal shape are aligned.

The first particles P1 are densely arranged within these regular hexagonal regions. In the other regions (white regions in FIG. 10A), the first particles P1 are not arranged, and the adhesive portion on the surface of the second base material 11b is exposed. The regular hexagonal regions in which the first particles P1 are retained are referred to as first pattern regions. Furthermore, the regions of the honeycomb pattern in which the second particles P2 are retained, corresponding to the gaps between the first pattern regions, are referred to as second pattern regions.

FIG. 10B is a view schematically illustrating the second base material 11b after the second particles P2 have been filled by the second filling apparatus 24b, and is a view of the second base material 11b as viewed from a direction perpendicular to its surface. As illustrated in FIG. 10B, in the regions where the first particles P1 are not arranged and the adhesive portion is exposed, the second particles P2 are densely arranged. Furthermore, at the boundaries between the regions where the first particles P1 are arranged and the regions where the second particles P2 are arranged, the first particles P1 and the second particles P2 are densely arranged. Note that particles can also be filled into the gaps between the first particles P1 under the same method. In this case, by using a filler including particles having a particle diameter corresponding to the gaps between the first particles P1, it is possible to fill the particles in the same manner, thereby enabling the formation of an even denser thin film.

Particle Arrangement Apparatus 2

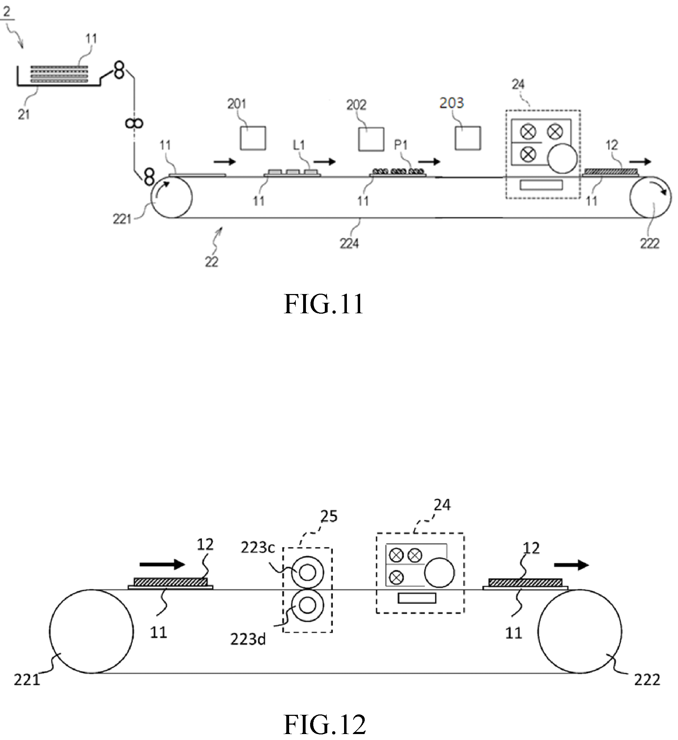

FIG. 11 is a view schematically illustrating the particle arrangement apparatus 2. The particle arrangement apparatus 2 is an apparatus that forms a particle layer 12 on a base material 11, and has a storage container 21 that stores and supplies the base material 11, and a belt apparatus 22 that transports the base material 11. Furthermore, the particle arrangement apparatus 2 may also have a liquid application apparatus 201 that applies a liquid to provide an adhesive portion on the base material 11. In this case, in order to densely arrange particles on the base material 11, the liquid is preferably applied to the base material 11 in a pattern.

The liquid application apparatus 201 can be a apparatus that ejects a liquid or an apparatus that applies a liquid using an inkjet system, and can also be a plate-based method such as a flexographic plate. Among these, the liquid application apparatus is preferably an apparatus that ejects a liquid using an inkjet system.

Examples of apparatuses that eject a liquid using an inkjet system include various types such as thermal types, piezo types, electrostatic types, and continuous types.

The liquid applied by the liquid application apparatus 201 may be aqueous or oily, provided that it comprises a material to which the first particles P1 can be attached. A material that does not react with the first particles P1 is appropriately selected. Furthermore, the liquid application apparatus 201 may form a pattern L1 using a plurality of types of liquids. For example, the liquid application apparatus 201 may apply two types of liquids that react with the base material 11 to enhance viscosity. Examples of materials to which the first particles P1 can be attached include resins such as acrylic resin.

A powder application apparatus 202 applies powder comprising the first particles P1 to the base material 11 on which the liquid has been applied in a pattern. As a result, the first particles P1 are fixed by the material on the base material 11 and fixed in a pattern corresponding to the pattern L1.

Means for supplying the powder by the powder application apparatus 202 can be means for spraying the powder toward the base material 11 or sprinkling means. The powder application apparatus 202 may further include means for removing the first particles P1 that have not been fixed to the base material 11 using vibration, centrifugal force, air blowing, suction, or the like.

The particle arrangement apparatus 2 may further include a drying apparatus that vaporizes at least a part of the liquid applied by the liquid application apparatus 201 to control the amount of the material on the base material 11, the thickness of the pattern L1, and the like. This drying apparatus may be provided downstream of the liquid application apparatus 201 and upstream of the powder application apparatus 202. The material on the base material after drying may be a liquid, a solid-comprising liquid, or only a solid.

In the method for manufacturing the electrode base material, the second step may also be referred to as a particle rubbing step in which the first particles P1 arranged on the surface of the adhesive portion are rubbed to be fixed. In the particle rubbing step, the first particles P1 are rubbed using the above-described bearing material S3.

The method for manufacturing the electrode base material only needs to include the above-described steps, and the order of the respective steps may be appropriately changed. For example, a step of rubbing the surfaces of the first particles P1 is performed after a step of arranging the first particles P1 on the resin base material. After the rubbing step, a step of arranging the second particles P2 on the resin base material is performed. In addition, a step of rubbing the first particles P1 and the second particles P2 may also be performed. That is, the particle rubbing step may include the steps of rubbing the first particles P1 and the second particles P2 arranged on the resin base material.

FIG. 12 is a view schematically illustrating the respective devices used in the second and third steps. The base material 11 on which the first particles P1 have been arranged is transferred to the belt device illustrated in FIG. 12.

In the belt device, a particle rubbing device 25 is provided on the upstream side, and the filling device 24b for arranging the second particles P2 is provided on the downstream side. The particle rubbing device 25 has pressing rollers 223c and 223d, and the pressing roller 223d rotates in a driven manner. At least one of the pressing roller 223c and the pressing roller 223d is preferably a soft roller having an elastic layer on its layer, for example, a soft roller having an elastic layer made of silicone rubber or fluororubber on the surface of a stainless steel core can be used. Furthermore, a heater that is not illustrated may be incorporated inside at least one of the pressing roller 223c and the pressing roller 223d.

The base material 11 is transported by the belt device to the pressing portion between the pressing rollers 223c and 223d. When the base material 11 is pressed by the pressing rollers 223c and 223d, the first particles P1 arranged on the surface of the adhesive portion on the base material settle into the adhesive portion of the base material. At this time, the above-described heater may be used to facilitate rearrangement of the particles in the adhesive portion of the base material. Furthermore, in order to heat the adhesive portion of the base material, a heating source may be provided upstream of the particle rubbing device 25.

The pressing roller 223c comes into contact with the particle layer 12 on the base material, therefore, in order to suppress attachment of particles, the surface of the pressing roller 223c is preferably coated with a material such as fluorine that has excellent releasability. Furthermore, a cleaning mechanism that removes particles attached to the pressing roller 223c may be provided. The particle layer 12 is more preferably pressed while being coated by a protective material (not illustrated).

In this case, the protective material to be used is preferably a material having excellent mold releasing properties, a fluorine sheet is preferable when the protective material is a resin, and a nichrome foil is preferable when it is a metal. When the protective material is used, a removal mechanism (not illustrated) that removes the protective material is provided downstream of the particle rubbing device 25 and upstream of the second filling device 24b.

The particle rubbing device 25 may alternately be another known pressing device. For example, an isostatic pressing apparatus (CIP/HIP), a uniaxial pressing apparatus, a weight, or a magnet may be used for pressing. Furthermore, when the specific gravity of particles is high, the particles may settle under their own weight.

After the first particles P1 arranged on the base material 11 are rubbed and fixed, a liquid for providing an adhesive portion may be applied by a liquid application device 203 to at least regions where the first particles P1 are not arranged. The liquid application device 203 has the same function as that of the liquid application device 201. Furthermore, a removal mechanism (not illustrated) that removes an excess solvent from the applied liquid may be provided. On the surface of the base material 11 onto which the liquid has been applied by the liquid application device 203, the second particles P2 are arranged using the second filling device 24. As a result, a dense particle layer 12 is formed on the base material 11.

Furthermore, the particle arrangement apparatus 2 may have a transfer unit, similarly to the particle arrangement apparatus 1. In this case, the transfer unit is provided downstream of the powder application apparatus 202. The first particles P1 are transferred from the base material 11 to another base material having an adhesive portion. On the base material to which the first particles P1 have been transferred, the second particles P2 can be arranged in the regions where the first particles P1 are not arranged and the adhesive portion is exposed, using the second filling apparatus 24. As a result, it is possible to densely arrange the first particles P1 and the second particles P2 on the adhesive portion of the resin base material.

Using the above-described particle arrangement device 1 or the particle arrangement device 2, the first particles P1 are arranged in the adhesive portion of the resin base material in the first step in FIG. 2 (S101 in FIG. 2). Then, the first particles P1 are rubbed and fixed in the second step in FIG. 2, and the second particles P2 are arranged in the adhesive portion of the same resin base material in the third step in FIG. 2 (S103 in FIG. 2).

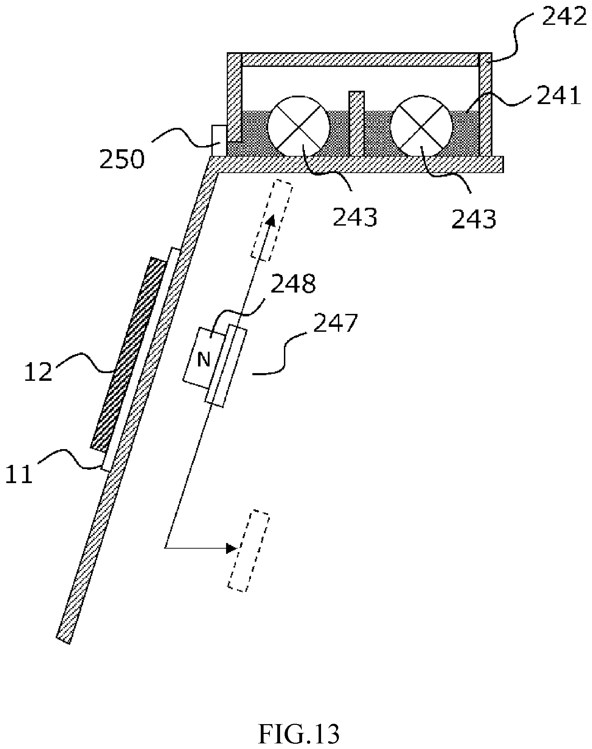

The first and second filling apparatus 24 can be a simple apparatus that does not use a belt apparatus. FIG. 13 is an example of the apparatus. The third filling apparatus 24 has a filling container 242, an agitation screw member 243, a magnetic member 247, a magnet 248, and a regulating member 250.

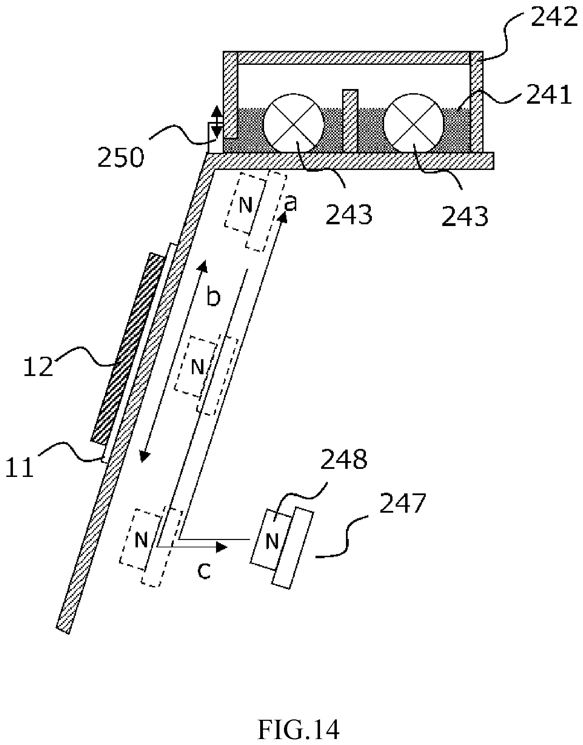

FIG. 14 is a schematic view illustrating the operation of the filling apparatus. An appropriate amount of a filler 241, which has been sufficiently agitated by the agitation screw member 243, is supplied under the magnetic member 247 (as indicated by arrow a in the figure) that has moved from the home position and the regulation of the regulating member 250. The supplied filler 241 rubs against the base material 11 as the magnetic member 247 reciprocates (as indicated by arrow b in FIG. 14).

After the desired number of rubbing actions, the magnetic member 247 moves to the remote home position (as indicated by arrow c in FIG. 14) where the magnetic force acting on the filler 241 on the base material is sufficiently weakened. The filler 241 on the base material falls downward due to gravity and is collected in a collection container that is not illustrated. At this time, it is more preferable to use air blow or vibration. Furthermore, instead of rubbing on an inclined surface as illustrated in the figure, the filler 241 may be rubbed on a flat surface, and after collecting the filler 241, the magnetic member 247 may reciprocate again to collect the filler 241 remaining on the base material. In this case, it is more preferable to use air blow or vibration for each collection.

In manufacturing the electrode base material, additional steps may be provided between the above-described respective steps or after the third step. That is, a step of arranging the third particles P3 and a step of rubbing the arranged third particles P3 may be provided.

For example, a step of rubbing the surfaces of the first particles P1 is performed after a step of arranging the first particles P1 on the resin base material. After the rubbing step, a step of arranging the second particles P2 on the resin base material is performed. After that, a step of arranging the third particles P3 on the first and second particles P1 and P2 may be further performed. In addition, a step of rubbing the surfaces of the third particles P3 may be performed.

Application of the third particles P3 can be performed in the same manner as that of the filling devices 24a and 24b described in the particle arrangement device 1, or as the mechanism described in the particle arrangement device 2. Furthermore, the rubbing step can also be performed using the above-described magnetic particles or the rubbing device after the arrangement of the respective particles.

In the electrode base material, the coverage ratio of the active material particles and the solid electrolyte particles of the resin base material surface is preferably at least 60%, more preferably at least 70%, and still more preferably at least 80%.

In the present disclosure, the coverage ratio on the surface of the resin base material refers to the proportion (area%) of the area coated by the active material particles and the solid electrolyte particles to the total surface area of the resin base material. The coverage ratio of the active material particles and the solid electrolyte particles on the surface of the base material can be measured by acquiring an image of the region of the formed particle layer from the vertical direction of the base material using an optical microscope, and by calculating the proportion of the area coated by the active material particles and the solid electrolyte particles using image processing software. The details of the determination method will be described below.

The upper limit of the coverage ratio is not particularly limited, but is preferably not more than 99%, and more preferably not more than 98%. For example, the coverage ratio of the active material particles and the solid electrolyte particles on the surface of the resin base material is preferably from 60 to 99%, 70 to 99%, 80 to 99%, 60 to 98%, 70 to 98%, or 80 to 98%.

When the coverage ratio falls within the above ranges, a dense particle layer is formed on the base material, improving the density of the particles within the electrode. As a result, the ionic conductivity can be enhanced.

Method for Manufacturing Electrode

Hereinafter, an example of a method for manufacturing an electrode will be described in detail with reference to the drawings. Although a positive electrode using positive electrode active material particles will be described below as an example, the method described below can be used to manufacture the electrode, regardless of whether the electrode is a positive electrode or a negative electrode.

The method for manufacturing the electrode includes the following three steps (first to third steps).

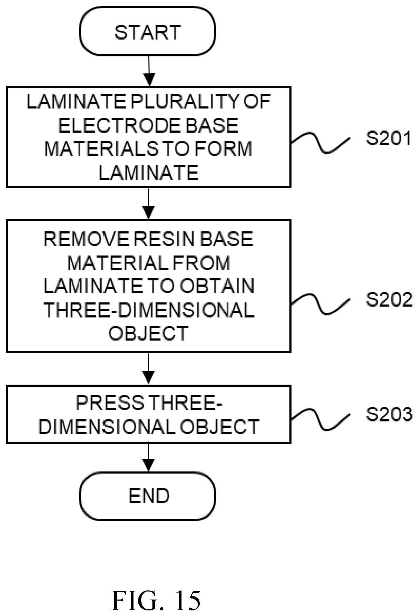

(1) A first step (S201 in FIG. 15) of laminating a plurality of electrode base materials to form a laminate.
(2) A second step (S202 in FIG. 15) of removing a resin base material from the laminate to obtain a three-dimensional object.
(3) A third step (S203 in FIG. 15) of pressing the three-dimensional object to obtain an electrode.

That is, the electrode is manufactured according to the method including: a step of laminating a plurality of electrode base materials to form a laminate; a step of removing a resin base material from the laminate to obtain a three-dimensional object; and a step of pressing the three-dimensional object. For example, a sintered compact made of the above-described electrode base material can be used as the electrode.

Hereinafter, each step of the method for manufacturing the electrode will be described in detail.

First Step

The first step refers to a step of laminating a plurality of electrode base materials to form a laminate. The number of layers is not particularly limited and is determined according to the desired electrode capacity. For example, at least three of the above-described electrode base materials are preferably laminated. Furthermore, the laminated electrode base materials may be the same or different.

That is, the electrode base material can also be used as an electrode base material laminate in which a plurality of electrode base materials are laminated. As described above, the electrode base material has a resin base material and a particle layer formed on the resin base material. When the electrode base materials are laminated, the laminate preferably has the resin base materials and the particle layers arranged alternately. That is, the electrode base material laminate preferably has a configuration in which the resin base materials and the particle layers are alternately arranged in its cross section.

Such a configuration can achieve sufficient contact between the active material particles, between the active material particles and the solid electrolyte particles, and between the solid electrolyte particles, thereby further improving ionic conductivity and electron conductivity. For example, a sintered compact of an electrode base material laminate can be used as an electrode. Furthermore, a sintered compact obtained by sintering the electrode base material, in which at least a part of the resin base material thereof is removed, may be used as the electrode.

Furthermore, the laminate is preferably formed on an electrode collector that serves as a substrate. That is, the electrode preferably has a substrate. The electrode collector can be a known collector, such as an Al foil, an SUS foil, a Cu foil, a Cu-Ni foil, platinum, or a gold foil. An electrolyte may also be used as the substrate.

As described above, electron transfer can be made smooth by increasing the contact area between the active material particles, which have excellent electron conductivity, and the collector. Accordingly, it is preferable that a surface of the electrode base material where a large number of the active material particles are exposed be formed on the collector side. That is, when forming a laminate on an electrode collector, it is preferable to laminate the electrode base material such that the surface of the electrode base material on the resin base material side is provided on the collector side.

In this case, the electrolyte may also be a separately prepared solid electrolyte sheet, or an electrolyte base material composed only of solid electrolyte particles on the same base material. That is, a solid electrolyte may be used as the electrolyte. Furthermore, the solid electrolyte sheet or the electrolyte base material may have a negative electrode or a negative-electrode base material formed on the side opposite to the laminated surface of the positive-electrode base material.

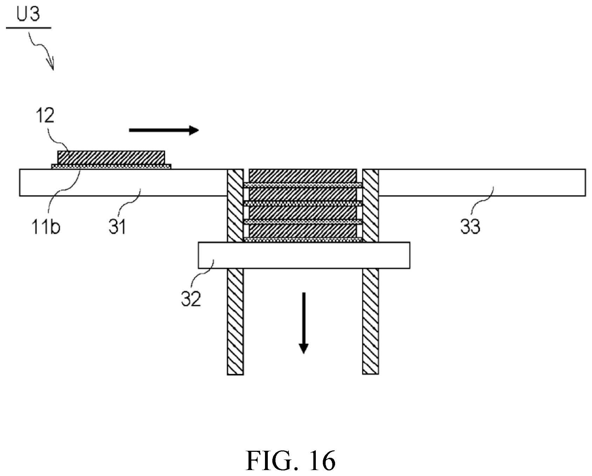

FIG. 16 is a view schematically illustrating the configuration of a laminate forming apparatus. The laminate forming apparatus has a transport apparatus 31 that transports the base material 11 on which the particle layer 12 has been formed, and a stage 32 capable of relatively moving in the vertical direction through an actuator that is not illustrated.

The transport apparatus 31 receives the base material 11, on which the particle layer 12 has been formed by the particle arrangement apparatus, and transports the received base material 11 to the stage 32. Examples of the transport apparatus 31 capable of transporting the base material 11 include a belt conveyor, a roller, and a robot arm.

When the base material 11 is transported to the stage 32 by the transport apparatus 31, the stage 32 moves in the vertical direction by an amount corresponding to the total thickness of the base material 11 and the particle layer 12. By repeating the transport by the transport apparatus 31 and the movement of the stage 32, a plurality of base materials 11, each having the particle layer 12 formed thereon, are laminated, thereby forming a laminate 15.

At this time, the base materials 11 preferably have an adhesive portion on the back surface, on which the particle layer 12 has been formed. Through the adhesive portion, the base materials are attached to each other, and the strength of the laminate increases, therefore, displacement between the base materials after the first step can be suppressed. In addition, the particle layer 12 between the base materials is sandwiched between the upper and lower adhesive portions, and this arrangement can suppress the displacement of the arrangement during the processes or the storage of the laminate. Note that the adhesive portion may be coated by a coating apparatus that is not illustrated before lamination, or a previously coated base material may be used, with a protective film on the coated surface peeled off before lamination.

Note that a static eliminating step of removing charges from the base materials is preferably provided immediately before the laminate 15 is formed. The particle layer 12 formed using the particle arrangement apparatus and the base material 11 tend to be charged, generating an electrostatic repulsive force between the base materials during lamination. Therefore, when the base materials are laminated in the first step, they may peel off or voids tend to be formed between the base materials. In the static eliminating step, it is preferable to eliminate charges in a non-contact manner using an electrostatic charge eliminating blower or the like.

Furthermore, after the laminate 15 is formed, a degassing step of degassing the laminate is preferably provided to reduce the voids between the base materials. In the degassing step, a vacuum packaging machine or the like is preferably used to perform degassing.

Second Step

The second step refers to a step of sintering the laminate and removing a resin base material from the laminate.

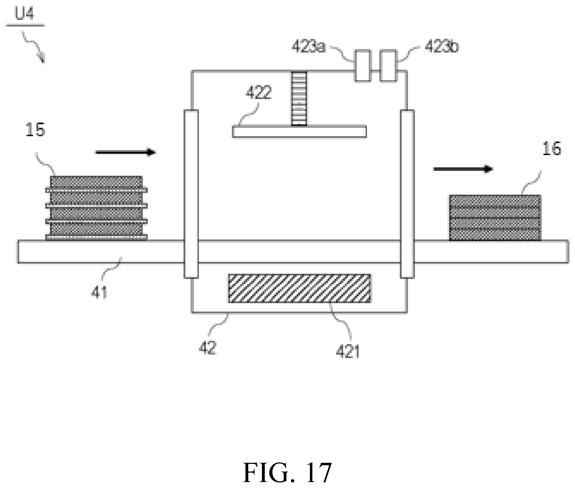

FIG. 17 is a view schematically illustrating the configuration of a sintering apparatus. The sintering apparatus has a transport apparatus 41 that transports the laminate 15, and a heating furnace 42 that heats the laminate 15.

The transport apparatus 41 receives the laminate 15 from the laminate forming apparatus and transports the received laminate 15 to the heating furnace 42. The transport apparatus 41 is preferably an apparatus capable of transporting the laminate 15, similarly to the transport apparatus 31. Examples of the apparatus capable of transporting the laminate 15 include a belt conveyor, a roller, and a robot arm.

The heating furnace 42 is a furnace that heats the laminate 15. The heating furnace 42 has heating means 421, pressing means 422, and atmosphere regulating means 423. The heating furnace 42 can be a firing furnace used for firing ceramics or the like. The pressing means 422 presses the laminate 15 that is being heated in the heating furnace 42, or presses the laminate 15 before and after heating.

Note that in the pressing means 422, the pressing portion for pressing the laminate 15 is preferably made of a porous material through which gas can easily pass. The atmosphere regulating means 423 has atmosphere-gas supply means 423a and depressurizing means 423b, and regulates the atmosphere gas inside the processing space of the heating furnace 42.

The atmosphere gas can be an oxidizing atmosphere ($O_2$), an inert atmosphere (such as Ar or $N_2$), or a reducing atmosphere (Ar-$H_2$), but sintering may also be performed under the atmosphere.

When the laminate is subjected to the sintering process, the laminate is preferably heated by at least the thermal decomposition temperature of the base material 11 in the laminate 15, and by a temperature less than the thermal decomposition temperature of each particle layer in the laminate 15. The temperature at which the laminate is heated is preferably from 200°C to 1000°C, and more preferably from 400°C to 800°C. At the sintering temperature, the laminate is preferably maintained for at least 30 minutes, and more preferably for at least 1 hour.

The thermal decomposition temperature refers to the temperature at which the weight of a material starts to decrease when the temperature is gradually increased under the heating atmosphere in the sintering apparatus. Accordingly, by heating the laminate at a temperature of at least the thermal decomposition temperature of the base material 11, the base material 11 in the laminate can be decomposed to reduce its weight, thereby removing the resin base material from the laminate.

The heating temperature is preferably at least the thermal decomposition temperature of the base material 11, but the laminate is preferably heated at a temperature much higher than the thermal decomposition temperature. Specifically, when a thermogravimetric analysis is conducted by increasing the temperature from room temperature (25°C) at a rate of 5°C/minute under the heating atmosphere in the sintering apparatus, the laminate is preferably heated by at least the temperature at which the mass is 70% of the initial mass. Specifically, the heating temperature is preferably, for example, at least 385°C.

Furthermore, when a thermogravimetric analysis is conducted similarly, the laminate is preferably heated by at least the temperature at which the mass is 50% of the initial mass, and more preferably heated by at least the temperature at which the mass is 20% of the initial mass. Specifically, the heating temperature is preferably, for example, at least 400°C, and more preferably at least 450°C. As a result, the time required for removing the resin base material can be shortened, or the rate of removing the resin base material can be increased.

As described above, when the sintering apparatus removes the base material 11 by heating, the active material particles and the solid electrolyte particles preferably have a higher thermal decomposition temperature than the base material 11. Typically, inorganic materials tend to have higher thermal decomposition temperatures than organic materials, therefore, the active material particles and the solid electrolyte particles are preferably inorganic materials, and the material of the base material 11 is preferably an organic material such as a resin. Furthermore, when the sintering apparatus removes the base material 11 by heating, the active material particles preferably have a softening point higher than the thermal decomposition temperature of the base material 11.

The sintering device is required to remove, by heating, at least a part of the resin base material in the laminate 15 to provide regions where particles of upper and lower laminated layers are in contact with each other. It is preferable to remove 90 mass% or more of the resin base material in the laminate 15 by heating, more preferably 95 mass% or more, and still more preferably 97 mass% or more. At this time, the resin base material is preferably burned or gasified and released to the outside as a gas. In this case, when the resin base material gasified by thermal decomposition is released as a gas to the outside of the laminate, the particle layer formed on the resin base material may be pushed up, disturbing its shape.

Therefore, the thickness of the resin base material is preferably made thinner to reduce its influence on the particle layer.

Specifically, the thickness (μm) of the resin base material is preferably not more than 10 times the thickness of the particle layer on the resin base material, more preferably not more than 5 times, and still more preferably not more than 2 times. Here, when the surface of the resin base material is defined as (x, y) and the laminating direction of the resin base material is defined as (z) in the electrode base material, the thickness of the particle layer refers to the difference between the maximum and minimum values of z in a region (x, y, z) where each particle arranged on the resin base material is present.

The thickness of the resin base material is preferably from 1 $\mu$m to 1 mm. The thickness of the particle layer is preferably from 0.1 $\mu$m to 100 $\mu$m.

The thickness of the particle layer on the resin base material is, when the cross-section of the laminate 15 is SEM-observed by a BIB-SEM and the surface of the resin base material is defined as x and the laminating direction of the resin base material is defined as z, calculated by determining the particle presence region (x, z) using image processing software, and by obtaining the difference between the maximum and minimum values of z. Here, the BIB-SEM imaging conditions, required image region, and image processing method are the same as those described above.

The thickness of the resin base material may be determined from a BIB-SEM, similarly to the particle diameter of the active material particles, or may be measured using a digital thickness gauge or the like. Furthermore, in SEM observations using the BIB-SEM, examples of methods for specifying the active material particles, the solid electrolyte particles, the base material, and the adhesive portion include analyzing the elemental composition by EDS.

The sintering apparatus preferably exhausts the released gas to the outside of the heating furnace 42 using the depressurizing means 423b. By creating an oxidizing atmosphere, that is, an atmosphere comprising oxygen gas such as air inside the heating furnace 42 through the atmosphere-gas supply means 423a or the like, the resin base material can be burned and removed. On the other hand, depending on the active material particles and solid electrolyte particles used, sintering in an oxidizing atmosphere may cause decomposition or compositional changes. In this case, sintering is preferably performed in an inert atmosphere (such as Ar or $N_2$) or a reducing atmosphere (Ar-$H_2$).

As described above, when the resin base material is gasified by thermal decomposition and released from the laminate 15 as a gas, each particle layer in the laminate 15 may be pushed up, disturbing its shape. Therefore, when heating is performed in the heating furnace 42, the laminate 15 may be pressed by the pressing means 422 before or during heating.

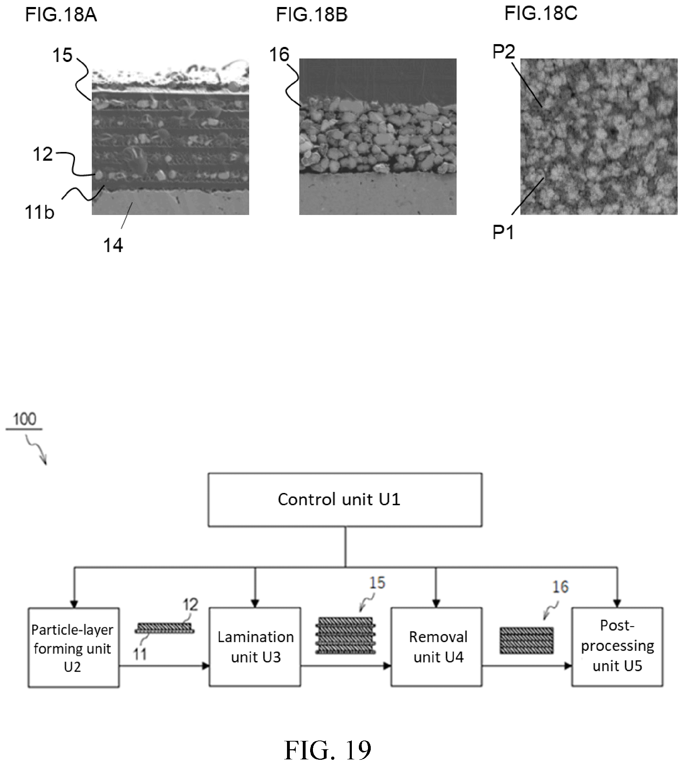

FIG. 18A is a BIB-SEM image of the cross section of the laminate after the first step. In the laminate 15, six layers of the second base materials 11b, each having the particle layer 12 formed thereon, are laminated on a substrate 14. FIG. 18B is a BIB-SEM image of the three-dimensional object 16 (positive electrode) after the second step. In the three-dimensional object 16, the resin base material is removed from the laminate 15, leaving the six particle layers. FIG. 18C is an SEM image of the three-dimensional object 16 as viewed from above. The first particles P1 and the second particles P2, which were periodically arranged on the second base material 11b in the first step, remain even after the second step.

Third Step

The third step refers to a step of pressing the three-dimensional object 16 from which the resin base material has been removed.

As a pressing method, the three-dimensional object 16 can be pressed by the pressing means 422 during cooling or heat release after heating. Furthermore, after the resin base material is removed by the sintering apparatus, the three-dimensional object 16 may be separately pressed by a pressing apparatus. Specifically, the pressing is preferably performed by vacuum degassing, isostatic pressing, or a commonly used hydraulic press or roller press machine. Particularly, the pressing is preferably performed using vacuum degassing and isostatic pressing in combination.

The pressing is preferably performed at a pressure from 5 MPa to 500 MPa. As a result, voids in the three-dimensional object from which the resin base material has been removed are filled, thereby improving the density and strength of the three-dimensional object. After the third step, the three-dimensional object may be reheated and sintered by the sintering apparatus. Furthermore, the laminate may be impregnated with a solution in which a conductive auxiliary agent, a binder resin, or the like is dispersed in a solvent, thereby dispersing each material into the laminate.

By the method including the above-described steps, an electrode can be manufactured.

The electrode preferably has a substrate and a particle layer including active material particles and solid electrolyte particles. Furthermore, voids are preferably present in the particle layer.

With such configuration, it is possible to mitigate the ionic conductivity inside the electrode and the volume variation of the active material particles.

FIG. 19 is a diagram schematically illustrating the overall configuration of a lamination shaping system. The lamination shaping system 100 has a control unit U1, a particle-layer forming unit U2, a lamination unit U3, a removal unit U4, and a post-processing unit U5.

The control unit U1 controls each unit of the lamination shaping system 100.

In the particle-layer forming unit U2, the above-described particle arrangement apparatus (FIG. 3) is used to form the particle layer 12 on the base material 11.

In the lamination unit U3, the above-described laminate forming apparatus (FIG. 16) is used to laminate the plurality of base materials 11, each having the particle layer 12 formed thereon by the particle-layer forming unit U2, to form a laminate 15 comprising the plurality of particle layers 12 and the plurality of base materials 11.

In the removal unit U4, the above-described sintering apparatus (FIG. 17) is used to remove the base materials 11 from the laminate 15, which has been formed by the lamination unit U3, to form a three-dimensional object 16 (electrode).

In the post-processing unit U5, post-processing is performed on the three-dimensional object 16, which has been formed by the removal unit U4.

Note that the unit configuration illustrated in FIG. 19 is merely an example, and another configuration may be adopted. Hereinafter, the configuration of operation of each unit will be described.

Control Unit

The control unit U1 performs control of each unit of the lamination shaping system 100, specifically the particle-layer forming unit U2, the lamination unit U3, the removal unit U4, and the post-processing unit U5, and the like.

The control unit U1 may include a three-dimensional shape data input unit that receives the input of three-dimensional shape data of a three-dimensional object (hereinafter referred to as a "shaped object"), which is to be formed by the lamination shaping system 100, from an external device (such as a personal computer). The three-dimensional shape data can be data created and output by a three-dimensional CAD, a three-dimensional modeler, a three-dimensional scanner, or the like. The file format is not limited, but, for example, the STL (stereolithography) file format can be preferably used.

The control unit U1 may include a slice-data calculation unit that calculates the cross-sectional shape of each layer by slicing the three-dimensional shape data at a specified pitch, and generates image data (referred to as "slice data"), which is to be used for image formation in the particle-layer forming unit U2, on the basis of the cross-sectional shapes.

As will be described in detail later, the particle-layer forming unit U2 of the present embodiment is capable of using a plurality of types of materials and forming a material layer in which the respective materials are patterned. For this reason, data corresponding to an image of each material may be generated as the slice data. The file format of the slice data can be, for example, multi-value image data (where each value represents the type of a material) or multi-plane image data (where each plane corresponds to the type of a material).

Furthermore, although not illustrated, the control unit U1 also includes an operation unit, a display unit, and a storage unit. The operation unit provides the function of receiving instructions from a user. For example, the operation unit is capable of receiving input to turn the power supply on or off, various apparatus settings, operation instructions, and the like. The display unit provides the function of providing information to the user. For example, the display unit is capable of displaying various setting screens, error messages, operating conditions, and the like. The storage unit provides the function of storing three-dimensional shape data, slice data, various setting values, and the like.

The control unit U1 can be configured, in terms of hardware, by a computer including a CPU (central processing unit), a memory, an auxiliary storage unit (such as a hard disk or a flash memory), an input apparatus, a display apparatus, and various I/Fs. Each of the above-described functions is realized when the CPU reads and executes a program stored in the auxiliary storage unit or the like and controls the required apparatuss. However, some or all of the above-described functions may be implemented by circuits such as ASICs or FPGAs, or may be executed by another computer using technologies such as cloud computing or grid computing.

Particle-Layer Forming Unit

The particle-layer forming unit U2 refers to a unit that forms the particle layer 12 on the base material 11. The particle-layer forming unit U2 can be the above-described particle arrangement apparatus (FIG. 3). The particle-layer forming unit may have a particle-filling unit and a rubbing unit.

The lamination shaping system 100 may have a plurality of particle-layer forming units U2. This allows the particle layers 12 to be formed on the base materials 11 simultaneously and in parallel, thereby further improving the throughput for forming the laminate and three-dimensional object. Furthermore, when there are many types of materials constituting the three-dimensional object, the particle-layer forming unit U2 may be provided for each material type or each material type group, and this eliminates the need to switch material types or processes within the particle-layer forming unit U2. As a result, the three-dimensional object can be manufactured continuously.

Lamination Unit

The lamination unit U3 is a unit that laminates the plurality of base materials 11, each having the particle layer 12 formed thereon by the particle-layer forming unit U2, to form the laminate 15 including the plurality of particle layers 12 and the plurality of base materials 11. The above-described laminate forming apparatus (FIG. 16) can be used.

The lamination unit U3 may further include a transport apparatus 33 that transports the formed laminate 15 to the removal unit U4 or the like, and a pressing apparatus (not illustrated) that presses the laminate 15 in the laminating direction. The transport apparatus 33 may have the same configuration as the transport apparatus 31.

Removal Unit

The removal unit U4 is a unit that removes the base materials 11 from the laminate 15, which has been formed by the lamination unit U3, to form the three-dimensional object 16. The above-described sintering apparatus (FIG. 17) can be used.

Post-Processing Unit

The post-processing unit U5 refers to a unit that performs post-processing on the three-dimensional object 16, which has been formed by the removal unit U4.

The type of the post-processing performed by the post-processing unit U5 is not particularly limited, but examples thereof include further heating the three-dimensional object 16 to perform sintering. Note that when the post-processing unit U5 performs heat processing as the post-processing, the removal unit U4 may also have that function. By sintering the three-dimensional object 16, the particles within each particle layer and between the particle layers can be sintered together.

Furthermore, depending on the active material particles and solid electrolyte particles used, a reducing gas such as carbon monoxide, which is generated during the removal of the resin base materials, may cause compositional changes and reduce ionic conductivity. In this case, the composition can be adjusted again by sintering (oxidation) in the post-processing unit U5 to improve the ionic conductivity. Of course, in the post-processing unit U5, sintering may be performed not only in an oxidizing atmosphere in which the oxygen concentration is controlled, but also in an inert atmosphere such as Ar or $N_2$, or a reducing atmosphere such as Ar-$H_2$.

Examples of post-processing other than sintering include impregnating the laminate with a solution in which a conductive auxiliary agent, a binder resin, or the like is dispersed in a solvent, thereby dispersing each material into the laminate. A drying step and a pressing step may also be included after the dispersion to volatilize the solvent and fix the binder.

A secondary battery has electrodes (a positive electrode and a negative electrode), an electrolyte layer adjacent to the electrodes, and collectors where necessary.

For example, the positive electrode can be an electrode manufactured using the above-described electrode base material. The electrode can be manufactured, for example, according to the above-described method.

Furthermore, the negative electrode is not particularly limited, and can be made of known materials. Example thereof include the negative electrode made of lithium metal, indium, tin, aluminum, zinc, a metal foil that forms a lithium alloy layer such as magnesium, graphite particles (such as graphite, hard carbon, or soft carbon), silicon particles, lithium titanate particles, and the like.

The electrolyte layer is not particularly limited and can be made of known materials. Examples thereof include the electrolyte layer made of $Li_{1.5}Al_{0.5}Ge_{1.5}P_3O_{12}$ (hereinafter also referred to as LAGP), $Li_{1.3}Al_{0.3}Ti_{1.7}P_3O_{12}$ (hereinafter also referred to as LATP), $Li_{5.9}Yb_{0.81}La_{0.09}Zr_{0.1}(BO_3)_3$ (hereinafter also referred to as LYbBO), $Li_3BO_3$ (hereinafter also referred to as LBO), $Li_{6.25}La_3Zr_2Al_{0.25}O_{12}$ (hereinafter also referred to as LLZ), $Li_{0.33}La_{0.55}TiO_3$ (hereinafter also referred to as LLT), and the like. Furthermore, the electrolyte may be an electrolyte sheet, which is manufactured by forming a material into a pellet using a pressing apparatus or the like and then sintering.

The collectors are not particularly limited and can be made of known materials. Examples thereof can include positive-electrode collectors made of, aluminum, stainless steel, platinum, gold, and the like. Furthermore, a negative-electrode collector can be made of copper, copper-nickel, platinum, gold, and the like. The above-described metals that can be used as the collectors may be used in the form of metal foils.

Method for Manufacturing Secondary Battery

A plurality of methods for manufacturing a secondary battery using the above-described lamination shaping system 100 may be employed, but some examples thereof will be provided. A case will be provided in which the lamination shaping system 100 is used to manufacture a positive electrode or a negative electrode. Using collectors or an electrolyte formed by another means as a substrate, a positive electrode, a negative electrode, or both electrodes can be manufactured by the system.

A secondary battery can be manufactured by laminating electrodes, collectors, and an electrolyte, packaging the laminate with an aluminum laminate film or the like where necessary, and molding and pressing the packaged body. That is, the method for manufacturing a secondary battery may include a step of laminating electrodes, collectors, and an electrolyte. The electrodes can be the above-described electrodes.

Furthermore, the method may include a step of preparing electrodes by the above-described method for manufacturing electrodes, and a step of providing a solid electrolyte adjacent to the electrodes. Furthermore, the method may also include a step of simultaneously providing the above-described electrodes and a solid electrolyte adjacent to the electrodes. That is, the electrodes and the solid electrolyte may be prepared in separate steps, or may be simultaneously prepared in the same step.

Here, examples of another means for forming the electrolyte include known methods, such as forming solid electrolyte particles into pellets by a uniaxial pressing apparatus or the like, and then sintering the formed pellets in an electric furnace or the like. The electrolyte may also be an electrolyte sheet or the like.

By laminating the respective manufactured members in the order of a positive-electrode collector, a positive electrode, an electrolyte, a negative electrode, and a negative-electrode collector, it is possible to manufacture laminate-type secondary batteries to be packed in a laminate film, or coin-type secondary batteries to be packed in a coin case.

Each particle constituting the positive electrode, the electrolyte, and the negative electrode may have different suitable temperatures and atmospheres during sintering. When handling such materials, it is preferable to separately manufacture the respective members, that is, the positive electrode, the electrolyte, and the negative electrode, and then assemble them into a battery. Furthermore, when lithium metal or indium is used as the negative electrode, the negative electrode is preferably used as a metal foil, or may be formed into a collector or an electrolyte through a vacuum process such as sputtering. Lithium metal has strong reducing power and is likely to decompose depending on the type of solid electrolyte. In such a case, a buffer layer may be provided between the electrodes and the electrolyte. The buffer layer is preferably a polymer electrolyte or the like.

In the above example, a laminate of a positive electrode or a negative electrode is formed using the lamination shaping system 100, thereby manufacturing an electrode. However, a laminate including at least two of the materials that mainly constitute a secondary battery, such as a positive-electrode collector, a positive electrode, an electrolyte, a negative electrode, and a negative-electrode collector, may be formed, thereby manufacturing a three-dimensional object.

For example, each base material is manufactured by the particle-layer forming unit U2. That is, a positive-electrode collector base material, a positive-electrode base material, an electrolyte base material, a negative-electrode base material, and a negative-electrode collector base material are manufactured. Each base material may comprise a plurality of types of particles (positive-electrode active material particles and solid electrolyte particles) as in the positive-electrode base material, or may comprise only a single type of particles. When a base material comprises only a single type of particles, a dense particle layer comprising only the single type of particles can be formed on the base material by filling the same type of filler into the filling apparatus 24a and 24b.

The electrolyte base material is made of a particle layer comprising at least solid electrolyte particles. The negative-electrode base material is made of a particle layer comprising at least negative-electrode active material particles. The collector base material is formed of a particle layer comprising at least conductive particles. A laminate, in which these base materials are laminated in the order of the positive-electrode collector base material, the positive-electrode base material, the electrolyte base material, the negative-electrode base material, and the negative-electrode collector base material, can be manufactured by the lamination unit U3, and a secondary battery can be manufactured by the removal unit U4 and the post-processing unit U5. In addition, a bipolar-type secondary battery can also be manufactured, in which electrode base materials are laminated on both surfaces of the collector base material.

EXAMPLES

The present disclosure is described in more detail below by using the Examples, but the present disclosure is not limited to these Examples. In the following Examples, number of parts is on a mass basis unless specifically indicated otherwise.

The positive electrode of a secondary battery was formed using the above-described lamination shaping system 100.

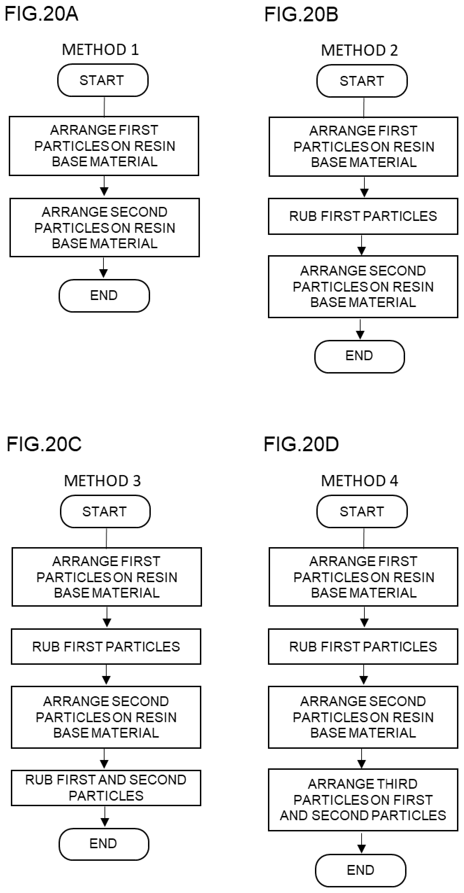

Specifically, the particle-layer forming unit U2 shown in FIG. 19 was used to form a particle layer on resin base materials, and then, the lamination unit U3 was used to laminate three such base materials, each having a particle layer formed thereon, on a collector (Al foil) to form a laminate. A method for applying particles using the particle-layer forming unit U2 was selected from methods 1 to 4 illustrated in FIG. 20 and used as described in Table 1 below.

After that, the removal unit U4 was used to remove the resin base materials from the laminate by heating, and the laminate was pressed to form the positive electrode as a three-dimensional object. Note that the sintering atmosphere and the sintering temperature (maintained for one hour) are shown in Table 5 below.

As the electrolyte, an electrolyte sheet (with a thickness of 260 $\mu$m) obtained by molding $Li_{1.5}Al_{0.5}Ge_{1.5}P_3O_{12}$ (hereinafter also referred to as LAGP) powder into pellets using a uniaxial pressing apparatus and sintering the resulting pellets in an electric furnace (at 850°C for 12 hours) was used. As the negative electrode, an indium foil (with a thickness of 50 $\mu$m) was used.

As the positive-electrode collector, an aluminum foil (with a thickness of 20 $\mu$m) was used. Furthermore, as the negative-electrode collector, a copper foil (with a thickness of 20 $\mu$m) was used.

The above-described materials were laminated in the order of the positive-electrode collector, the positive electrode, the electrolyte, the negative electrode, and the negative-electrode collector, then packed in an aluminum laminate film so as to arrange the tab leads for extraction electrodes, which were welded beforehand to the collectors, outside the laminate. After that, the packed laminate was molded into a laminate cell type by a vacuum packaging machine and pressed (at 196 MPa) using an isostatic pressing apparatus to manufacture an all-solid-state secondary battery.

As the first base material 11a, a polyester (PET) sheet was used. On the first base material 11a, a honeycomb unevenness pattern was formed by the pattern forming apparatus 23.

First, an ultraviolet-curable resin (ultraviolet-curable liquid silicone rubber, PDMS, manufactured by Shin-Etsu Chemical Co., Ltd.) was coated on the first base material 11a. Then, a film mold (standard mold, manufactured by Soken Chemical & Engineering Co., Ltd.) having a honeycomb unevenness pattern corresponding to the desired unevenness pattern was pressed against the ultraviolet-curable resin on the first base material 11a. With the film mold pressed, ultraviolet rays were irradiated using a UV lamp to cure the ultraviolet-curable resin, and the film mold was released.

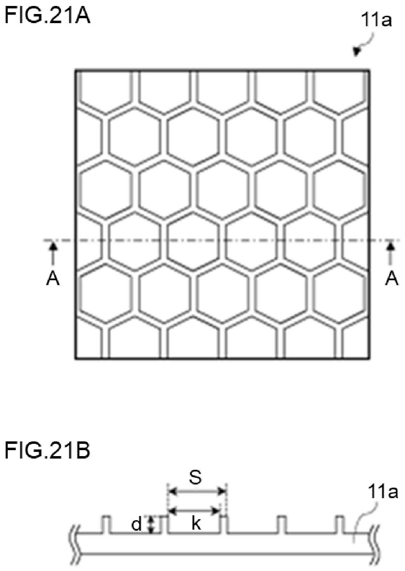

FIGS. 21A and 21B illustrate the structure of the first base material 11a having an unevenness pattern 111a formed on its surface. FIG. 21A is a top view of the first base material 11a, and FIG. 21B is a cross-sectional view taken along line A-A in FIG. 21A. As illustrated in FIGS. 21A and 21B, a honeycomb unevenness pattern having hexagonal frame-shaped protruded portions is formed on the surface of the first base material 11a.

Here, as illustrated in FIG. 21B, the width between the adjacent protruded portions is represented as k ($\mu$m), the pitch between the adjacent protruded portions is represented as s ($\mu$m), and the height of the protruded portions is represented as d ($\mu$m). Note that in the following Examples, the shape of the unevenness pattern was measured using a non-contact surface/layer section shape measuring system (VertScan 2.0, manufactured by Ryoka Systems Inc.).

As the second base material 11b, a polyester (PET) sheet having an acrylic adhesive applied to its front and rear surfaces was used. The thickness of the second base material 11b used was 3 $\mu$m. The acrylic adhesive was applied to the front and rear surfaces of the second base material 11b to form adhesive portions. The thickness of the formed adhesive portions was 1 $\mu$m.

As the first particle P1, any of $LiCoO_2$ (hereinafter also referred to as LCO), $LiMO_2$ (where M is an element selected from the group consisting of Ni, Mn, and Co, hereinafter also referred to as NMC), $LiFePO_4$ (hereinafter also referred to as LFP), and $Li_3V_2(PO_4)_3$ (hereinafter also referred to as LVP), each serving as an active material particle, was used. As the second particle P2 and the third particle P3, any of $Li_3BO_3$ (hereinafter also referred to as LBO) and $Li_{5.9}Yb_{0.81}La_{0.09}Zr_{0.1}(BO_3)_3$ (in-house brand, hereinafter also referred to as LYbBO), each serving as a solid electrolyte particle, was used. Note that a particle (Cellseed C-5H) manufactured by Nippon Chemical Industrial Co., Ltd. was used as LCO, a particle (Cellseed NMC) manufactured by Nippon Chemical Industrial Co., Ltd. was used as NMC, a particle manufactured by TOSHIMA Manufacturing Co., Ltd. was used as LFP, a particle manufactured by Tokyo Chemical Industrial Co., Ltd. was used as LVP, and a particle manufactured by TOSHIMA Manufacturing Co., Ltd. was used as $Li_3BO_3$.

As the bearing material S1 for the first particles P1, the bearing material S2 for the second particles P2, the bearing material S3 for the third particles P3, and the particles S0 for rubbing, standard carriers (standard carrier P02, manufactured by The Imaging Society of Japan), serving as magnetic particles, were used. The cumulative 50% particle diameter (median diameter) in the volume-based particle diameter distribution of the standard carriers was 81 $\mu$m.

<Method for Manufacturing Electrode Base Material 1>

LCO (first particles P1) and LBO (second particles P2) were mixed at a volume ratio of 7:3 to obtain a mixed powder. The obtained mixed powder and a standard carrier (bearing material S1) were agitated and mixed to obtain a filler 241a. Note that the above-described volume ratio was equivalent to the ratio of LCO to LBO applied to the electrode base material 2 used in Example 1 below.

As a method for forming a particle layer, the method 1 illustrated in FIG. 20A was employed. Using the filler 241a thus obtained, a particle layer 1 was formed on a resin base material by the particle-layer forming unit U2 to obtain an electrode base material 1. That is, the electrode base material 1 was obtained in which LCO and LBO comprised in the above-described mixed powder were arranged on the resin base material as the first particles P1 and the second particles P2. At this time, the unevenness pattern 111a on the first base material 11a was controlled such that a width k of depressed portions became 6.0 $\mu$m, a pitch s between protruded portions became 7.5 $\mu$m, and a height d of the protruded portions became 5.5 $\mu$m. The electrode base material 1 thus obtained was used as Comparative Example 1.

<Method for Manufacturing Electrode Base Material 2>

LCO (first particles P1) and a standard carrier (bearing material S1) were agitated and mixed to obtain a filler 241a. Similarly, LBO (second particles P2) and a standard carrier (bearing material S2) were agitated and mixed to obtain a filler 241b.

Using the fillers 241a and 241b thus obtained, a particle layer 2 was formed on a resin base material by the particle-layer forming unit U2 to obtain an electrode base material 2. As a method for forming the particle layer, the method 1 illustrated in FIG. 20A was employed. That is, after first particles P1 were arranged on the resin base material using the obtained filler 241a, the second particles P2 were arranged on the resin base material using the obtained filler 241b to form the particle layer 2. The unevenness pattern 111a on the first base material 11a was controlled such that a width k of depressed portions became 6.0 $\mu$m, a pitch s between protruded portions became 7.5 $\mu$m, and a height d of the protruded portions became 5.5 $\mu$m. The electrode base material 2 thus obtained was used as Example 1.

<Method for Manufacturing Electrode Base Material 3>

As fillers, the same fillers 241a and 241b as those used for forming the particle layer 2 on the electrode base material 2 were used.

As a method for forming the particle layer, the method 2 illustrated in FIG. 20B was employed. That is, after the first particles P1 were arranged on a resin base material using the above-described filler 241a, the first particles P1 were rubbed using particles S0. Then, the second particles P2 were arranged on the resin base material using the above-described filler 241b to form a particle layer 3, thereby obtaining an electrode base material 3. The electrode base material 3 thus obtained was used as Example 2.

<Method for Manufacturing Electrode Base Material 4>

As fillers, the same fillers 241a and 241b as those used for forming the particle layer 2 on the electrode base material 2 were used.

As a method for forming the particle layer, the method 3 illustrated in FIG. 20C was employed. That is, after the first particles P1 were arranged on a resin base material using the above-described filler 241a, the first particles P1 were rubbed using particles S0. Then, the second particles P2 were arranged on the resin base material using the above-described filler 241b. The first particles P1 and the second particles P2 were rubbed using the particles S0 to form a particle layer 4 using a rubbing unit included in the particle-layer forming unit U2, thereby obtaining an electrode base material 4. The electrode base material 4 thus obtained was used as Example 3.

<Method for Manufacturing Electrode Base Material 5>

As fillers, the same fillers 241a and 241b as those used for forming the particle layer 2 on the electrode base material 2 were used.

As a method for forming the particle layer, the method 4 illustrated in FIG. 20D was employed. That is, after the first particles P1 were arranged on a resin base material using the above-described filler 241a, the first particles P1 were rubbed using particles S0. Then, the second particles P2 were arranged on the resin base material using the above-described filler 241b. Thereafter, solid electrolyte particles P3 (LBO) were applied using a particle filling unit included in the particle-layer forming unit U2 to form a particle layer 5, thereby obtaining an electrode base material 5. The cumulative 50% particle diameter of the solid electrolyte particles P3 was 1.2 $\mu$m, which was smaller than the cumulative 50% particle diameter of the solid electrolyte particles P2 (11 $\mu$m). The electrode base material 5 thus obtained was used as Example 4.

<Method for Manufacturing Electrode Base Materials 6 and 7>

Except that the first particles P1 and the second particles P2 were changed as illustrated in Table 1, particle layers 6 and 7 were respectively formed under the same conditions as those for the particle layer 3, thereby obtaining electrode base materials 6 and 7. The electrode base materials 6 and 7 thus obtained were used as Examples 5 and 6, respectively.

<Method for Manufacturing Electrode Base Materials 8 to 10>

Except that the arrangement pattern of the first particles P1 and the second particles P2 on the resin base material was changed as illustrated in Table 1, particle layers 8 to 10 were formed under the same conditions as those for the particle layer 2, thereby obtaining electrode base materials 8 to 10. The electrode base materials 8 to 10 thus obtained were used as Examples 7 to 9, respectively.

<Method for Manufacturing Electrode Base Material 11>

As fillers, the same fillers 241a and 241b as those used for forming the particle layer 7 on the electrode base material 7 were used.

As a method for forming the particle layer, the method 4 illustrated in FIG. 20D was employed. That is, after the first particles P1 were arranged on a resin base material using the above-described filler 241a, the first particles P1 were rubbed using particles S0. Then, the second particles P2 were arranged on the resin base material using the above-described filler 241b. Thereafter, solid electrolyte particles P3 (LBO) were applied using the particle filling unit included in the particle-layer forming unit U2 to form a particle layer 11, thereby obtaining an electrode base material 11. The cumulative 50% particle diameter of the solid electrolyte particles P3 was 1.2 $\mu$m, which was smaller than the cumulative 50% particle diameter of the solid electrolyte particles P2 (11 $\mu$m). The electrode base material 11 thus obtained was used as Example 10.

Tables 1 and 2 show the compositions of the fillers 241a, 241b, and 241c used in forming the particle layer on the resin base material by the particle-layer forming unit U2, as well as the shape of the unevenness pattern 111a on the first base material 11a, in the process of manufacturing the electrode base materials 1 to 11.

[Table 1]

| | Particle layer | Particle layer forming method | Filler 241a | | Filler 241b | | Filler 241c | | Unevenness pattern 111a on base material 11a | | | |
|---|---|---|---|---|---|---|---|---|---|---|---|---|
| | | | P1 | Mass% of P1 | P2 | Mass% of P2 | P3 | Mass% of P3 | Pattern | Width k of depressed portion (μm) | Pitch s between protruded portions (μm) | Height d of protruded portion (μm) |
| Example 1 | Particle layer 2 | Method 1 | LCO | 17 | LBO | 18 | - | - | Honeycomb | 6.0 | 7.5 | 5.5 |
| Example 2 | Particle layer 3 | Method 2 | LCO | 17 | LBO | 18 | - | - | Honeycomb | 6.0 | 7.5 | 5.5 |
| Example 3 | Particle layer 4 | Method 3 | LCO | 17 | LBO | 18 | - | - | Honeycomb | 6.0 | 7.5 | 5.5 |
| Example 4 | Particle layer 5 | Method 4 | LCO | 17 | LBO | 18 | LBO | 2.4 | Honeycomb | 6.0 | 7.5 | 5.5 |
| Example 5 | Particle layer 6 | Method 2 | LCO | 17 | LYbBO | 15 | - | - | Honeycomb | 6.0 | 7.5 | 5.5 |
| Example 6 | Particle layer 7 | Method 2 | NMC | 10 | LBO | 18 | - | - | Honeycomb | 6.0 | 7.5 | 5.5 |
| Example 7 | Particle layer 8 | Method 2 | LFP | 10 | LBO | 18 | - | - | Line | 2.0 | 2.9 | 1.0 |
| Example 8 | Particle layer 9 | Method 2 | LVP | 10 | LBO | 18 | - | - | Line | 2.0 | 2.9 | 1.0 |
| Example 9 | Particle layer 10 | Method 2 | LVP | 10 | LYbBO | 15 | - | - | Line | 2.0 | 2.9 | 1.0 |
| Example 10 | Particle layer 11 | Method 4 | NMC | 17 | LBO | 18 | LBO | 2.4 | Honeycomb | 6.0 | 7.5 | 5.5 |

[Table 2]

| | | Particle layer forming method | Filler 241a | | | | Unevenness pattern 111a on base material 11a | | | |
|---|---|---|---|---|---|---|---|---|---|---|
| | | | P1 | Mass% of P1 | P2 | Mass% of P2 | Pattern | Width k of depressed portion ($\mu$m) | Pitch s between protruded portions ($\mu$m) | Height d of protruded portion ($\mu$m) |
| Comparative Example 1 | Particle layer 1 | Method 1 | LCO | 17 | LBO | 17 | Honeycomb | 6.0 | 7.5 | 5.5 |

The bearing material S1 in the filler 241a, the bearing material S2 in the filler 241b, the bearing material S3 in the filler 241c, and the bearing material (particles S0) used in rubbing were all the standard carriers described above.

In the Table, the particle mass% indicates the mass percentage of each particle in each filler.

Table 3 shows the particle diameters of primary particles constituting each particle in the fillers 241a to 241c. The particle diameters shown in Table 3 indicate the particle diameters of the materials comprised in the fillers before the formation of the particle layer. The particle diameters (r10, r50, r90) of the respective particles indicate particle diameters in the cumulative distribution of the volume-based particle diameter distribution of the primary particles, where r10 represents a cumulative 10% particle diameter, r50 represents a cumulative 50% particle diameter, and r90 represents a cumulative 90% particle diameter. That is, r50 corresponds to the median diameter. Note that the particle diameters were measured using a laser diffraction particle diameter distribution/scattering analyzer (LA-960, manufactured by HORIBA Ltd.).

[Table 3]

|  |  | Filler 241a | | | Filler 241b | | | Filler 241c | | |
| --- | --- | --- | --- | --- | --- | --- | --- | --- | --- | --- |
|  |  | First particle P1 | | | Second particle P2 | | | Third particle P3 | | |
|  |  | r10 | r50 | r90 | r10 | r50 | r90 | r10 | r50 | r90 |
|  |  | (μm) | (μm) | (μm) | (μm) | (μm) | (μm) | (μm) | (μm) | (μm) |
| Comparative Example 1 | Particle layer 1 | 3.9 | 7.1 | 13 | 4.7 | 11 | 24 | - | - | - |
| Example 1 | Particle layer 2 | 3.9 | 7.1 | 13 | 4.7 | 11 | 24 | - | - | - |
| Example 2 | Particle layer 3 | 3.9 | 7.1 | 13 | 4.7 | 11 | 24 | - | - | - |
| Example 3 | Particle layer 4 | 3.9 | 7.1 | 13 | 4.7 | 11 | 24 | - | - | - |
| Example 4 | Particle layer 5 | 3.9 | 7.1 | 13 | 4.7 | 11 | 24 | 0.6 | 1.2 | 10 |
| Example 5 | Particle layer 6 | 3.9 | 7.1 | 13 | 4.1 | 10 | 27 | - | - | - |
| Example 6 | Particle layer 7 | 2.8 | 3.7 | 5.2 | 4.7 | 11 | 24 | - | - | - |
| Example 7 | Particle layer 8 | 1.5 | 2.6 | 3.5 | 4.7 | 11 | 24 | - | - | - |
| Example 8 | Particle layer 9 | 1.0 | 1.9 | 2.8 | 4.7 | 11 | 24 | - | - | - |
| Example 9 | Particle layer 10 | 1.0 | 1.9 | 2.8 | 4.1 | 10 | 27 | - | - | - |
| Example 10 | Particle layer 11 | 2.8 | 3.7 | 5.2 | 4.7 | 11 | 24 | - | - | - |

The particle diameters r10, r50, and r90 of the standard carriers used as the bearing materials S1 to S3 and as the rubbing particles were 60 μm, 81 μm, and 113 μm, respectively.

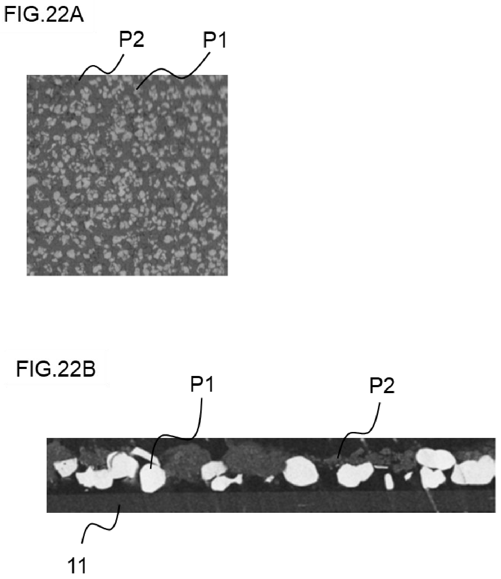

FIG. 22A is an SEM image of the electrode base material 2 according to Example 1 as viewed from above (the side where the particle layer is formed). In the plane of the electrode base material, LCO serving as the particles P1 is periodically and dispersively arranged, and LBO serving as the particles P2 is arranged between the particles P1. That is, in FIGS. 22A and 22B, P1 indicates the active material particles of the electrode base material, and P2 indicates the solid electrolyte particles of the electrode base material.

FIG. 22B is a BIB-SEM image of a cross section of the electrode base material 2 according to Example 1. On the resin base material (second base material 11b) of the electrode base material 2, a particle layer comprising the particles P1 and P2 was formed. Furthermore, in the particle layer, the solid electrolyte particles LBO serving as the particles P2 were arranged adjacent to LCO serving as the particles P1. The particles P2 were arranged so as to cover a part of surfaces of the particles P1.

Table 4 shows the evaluation results of Comparative Example 1 and Examples 1 to 9. The evaluation method will be described later.

[Table 4]

| | Coverage ratio (%) | Average height of active material particles ($\mu$m) | Area ratio of active material particles (area%) | | | Determination |
|---|---|---|---|---|---|---|
| | | | Upper surface | Lower surface | Difference | |
| Comparative Example 1 | 95 | 5.1 | 31.9 | 31.1 | 0.8 | X |
| Example 1 | 97 | 4.3 | 19.7 | 28.2 | 8.5 | O |
| Example 2 | 96 | 4.4 | 41.7 | 64.9 | 23.2 | O |
| Example 3 | 96 | 4.0 | 54.8 | 65.1 | 10.3 | O |
| Example 4 | 95 | 4.8 | 19.0 | 66.0 | 47.0 | O |
| Example 5 | 97 | 4.5 | 39.6 | 65.4 | 25.8 | O |
| Example 6 | 96 | 3.9 | 42.2 | 65.1 | 22.9 | O |
| Example 7 | 94 | 4.1 | 46.3 | 64.9 | 18.6 | O |
| Example 8 | 95 | 4.2 | 43.3 | 64.7 | 21.4 | O |
| Example 9 | 96 | 4.0 | 38 | 68.1 | 30.1 | O |
| Example 10 | 96 | 5.2 | 11.6 | 79.8 | 68.2 | O |

In the Table, "coverage ratio" refers to the coverage ratio of the active material particles and the solid electrolyte particles on the surface of the resin base material.

The "area ratio of the active material particles" refers to an area ratio of the exposed surfaces of the active material particles on a surface of the particle layer. The "upper surface" refers to a surface of the particle layer on a side opposite to a surface in contact with the resin base material. The "lower surface" refers to a surface of the particle layer that is in contact with the resin base material. The "difference" refers to a difference between the area ratio of the exposed surfaces of the active material particles on the lower surface and the area ratio of the exposed surfaces of the active material particles on the upper surface. The "determination" indicates that a case in which the above-described difference falls within a range of 1 to 70 area% is represented by O, whereas a case in which the difference falls outside the range is represented by X.

Hereinafter, a method for evaluating the electrode base material and a method for calculating each index will be described.

<Coverage Ratio>

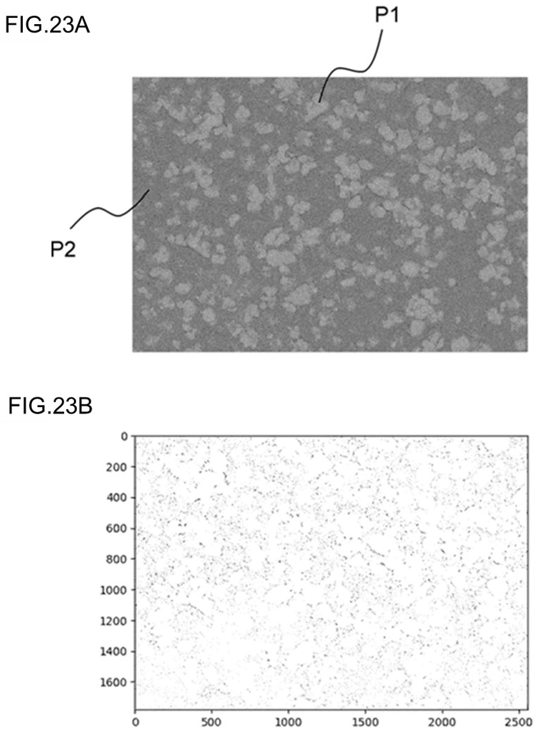

An image for calculating the coverage ratio was acquired by SEM observation. In the SEM observation, an image of the upper surface of the electrode base material (the side where the particle layer was formed) was acquired from the vertical direction using an electron microscope (S-4800, manufactured by Hitachi, Ltd.). An example of the SEM image thus acquired is illustrated in FIG. 23A. The image acquisition was performed under the following conditions.

Detector: ESB (backscattered electron image)
Observation conditions: 2 kV acceleration voltage
Magnification: 1000$\times$
Filter: 1500 V bias applied to ESB filter

Next, the elements and compositions of each particle on the resin base material were analyzed using SEM-EDX (PV77-47190ME, manufactured by AMETEK Co., Ltd.) to distinguish the active material particles from the solid electrolyte particles. In FIG. 23A, the active material particles are shown as white particles (P1), and the solid electrolyte particles are shown as gray particles (P2).

Specifically, the active material particles and the solid electrolyte particles were distinguished as follows. The resin base material was analyzed by X-ray diffraction (XRD) to identify the materials constituting the resin base material. Then, the unique elements comprised in the active material particles and the solid electrolyte particles can be detected and distinguished by SEM-EDX. When LCO is used as the first particles P1 serving as the active material particles and LBO is used as the second particles P2 and the third particles P3 serving as the solid electrolyte particles, Co is detected by SEM-EDX to distinguish the active material particles, and B is detected by SEM-EDX to distinguish the solid electrolyte particles.

The coverage ratio was calculated by finding the proportion of regions where the particles are present in the entire screen of the SEM image obtained by the above-described method. Specifically, the coverage ratio was calculated by the following image processing.

The image processing was performed using OpenCV, and analysis was performed using Python. The obtained SEM image was normalized to have an average lightness of 100 and a standard deviation of $\pm30$. The normalized image was binarized using a lightness threshold of 50, and an image was prepared in which all the particles were represented by white pixels. An example of the prepared image is illustrated in FIG. 23B. The proportion of pixels represented by white pixels to all the pixels in the image was analyzed and calculated as the coverage ratio of the particles. For example, the coverage ratio in FIG. 23A was 97%.

<BIB-SEM Imaging Method>

A BIB-SEM image was used to calculate the area ratio of exposed active material particles on a surface of a particle layer.

Hereinafter, BIB-SEM imaging conditions will be described below.

Three resin base materials were laminated on a substrate (Al foil), and the laminate was subjected to vacuum packaging and isostatic pressing to prepare a sample. The sample was cut in the laminating direction using a wire saw (DWS3400, wire diameter: 170 $\mu$m, diamond diameter: 30 $\mu$m), and a cross section was formed using an Ar-based broad ion beam (SM-09010 Cross Section Polisher, manufactured by JEOL Ltd.). The cross section was formed under a voltage of 6 kV and a current of 150 to 200 mA. For the BIB-SEM image, a cross section in the laminating direction of the resin base material and the particle layer was obtained and observed.

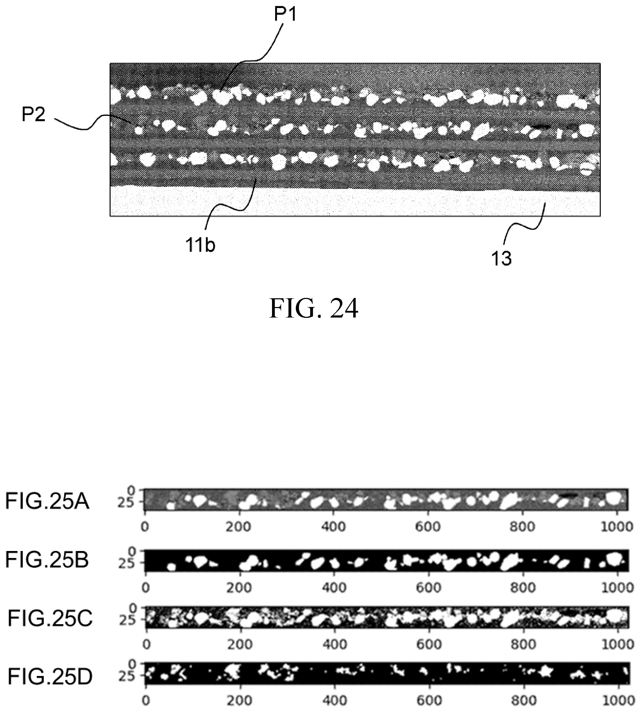

The cross section was imaged with an electron microscope (ULTRA55) under the following conditions. From the central region of the cross section, five images each comprising 100 active material particles were acquired by the method described below, so that a total of 500 active material particles were counted. FIG. 24 illustrates an example of the images thus acquired.

Detector: ESB (backscattered electron image)
Observation Conditions: 3 kV acceleration voltage
Magnification: 1000$\times$
Filter: Bias 1500 V applied to the ESB filter

Next, the elements and compositions of each particle on the resin base material were analyzed using SEM-EDX (XFlash Detector 630M, manufactured by Bruker Corporation) to distinguish the active material particles from the solid electrolyte particles.

The active material particles and the solid electrolyte particles are distinguished using the above-described method. The resin base material is analyzed by X-ray diffraction (XRD) to identify the materials constituting the resin base material. Thereafter, unique elements comprised in the active material particles and the solid electrolyte particles are detected by SEM-EDX using the above-described method, thereby distinguishing the active material particles from the solid electrolyte particles.

<Method for Calculating Area Ratio of Exposed Active Material Particles on Surface of Particle Layer>

From the BIB-SEM image acquired under the above-described conditions, active material particles and solid electrolyte particles were detected and identified. Image processing was performed using OpenCV, and analysis was performed using Python.

The BIB-SEM image was normalized so as to have an average lightness of 100 and a standard deviation of $\pm30$. In order to count the active material particles on the resin base material, an image representing only the particle layer on the resin base material was cut out from the above-normalized image so as to include all the particles in the particle layer. An example of the image cut out from the normalized image so as to include all particles in the particle layer is illustrated in FIG. 25A.

The image cut out from the normalized image so as to include all particles in the particle layer was binarized using a lightness threshold of 120 to obtain an image in which only the active material particles were represented by white pixels. For the purpose of noise elimination, regions surrounded by the white pixels were filled with white, and opening processing of morphological transformation was performed using a 3 $\times$ 3-pixel kernel to obtain an image after the noise elimination. An example of the image after the noise elimination from the image in which only the active material particles were represented by the white pixels is illustrated in FIG. 25B. FIG. 25B illustrates an image having 55 pixels in the vertical direction and 1024 pixels in the horizontal direction.

Next, the image after the noise elimination was divided into columns each having a horizontal width of 1 pixel. For example, in FIG. 25B, 1024 columns each having 55 pixels in the vertical direction and 1 pixel in the horizontal direction were obtained. In each column having a horizontal width of 1 pixel after the division, the uppermost and lowermost positions of the white pixels were determined. The uppermost and lowermost positions of the white pixels were recorded by calculating the distances (the number of pixels) from the lower end of the column to the uppermost/lowermost positions of the white pixels. The obtained values were used as values (P1-A) representing the positions of the uppermost surfaces of the active material particles and values (P1-B) representing the positions of the lowermost surfaces of the active material particles in each column.

Then, the image cut out from the normalized image so as to include all particles in the particle layer was binarized using a lightness threshold of 90 to obtain an image in which both the solid electrolyte particles and the active material particles were represented by white pixels. An example of the image in which both the solid electrolyte particles and the active material particles were represented by the white pixels is illustrated in FIG. 25C.

By subtracting the white pixel regions of the above-described image in which only the active material particles were represented by the white pixels from the image in which both the solid electrolyte particles and the active material particles were represented by the white pixels, an image in which only the solid electrolyte particles were represented by the white pixels was obtained. For the purpose of noise elimination, regions surrounded by the white pixels were filled with white, and opening processing of morphological transformation was performed using a $3 \times 3$-pixel kernel to obtain an image after the noise elimination. An example of the image after the noise elimination is illustrated in FIG. 25D.

Next, the image after the noise elimination was divided into columns each having a horizontal width of 1 pixel. In each column having a horizontal width of 1 pixel after the division, the uppermost and lowermost positions of the white pixels were determined by the above-described method and recorded. The obtained values were used as values (P2-A) representing the positions of the uppermost surfaces of the solid electrolyte particles and values (P2-B) representing the positions of the lowermost surfaces of the solid electrolyte particles in each column.

In each column, the obtained values (P1-A) of the positions of the uppermost surfaces of the active material particles were compared with the values (P2-A) of the positions of the uppermost surfaces of the solid electrolyte particles. Then, the number of columns in which the values (P1-A) of the positions of the uppermost surfaces of the active material particles were greater than the values (P2-A) of the positions of the uppermost surfaces of the solid electrolyte particles was recorded. That is, when the values (P1-A) of the positions of the uppermost surfaces of the active material particles were greater than the values (P2-A) of the uppermost surfaces of the solid electrolyte particles, it was determined that the active material particles appeared on the outermost surface of the particle layer on the side opposite to the side in contact with the resin base material. As described above, each column is a column having a horizontal width of 1 pixel in the cross-section observation image of the particle layer. Accordingly, it can be considered that the number of columns in which the values (P1-A) of the positions of the uppermost surfaces of the active material particles were greater than the values (P2-A) of the positions of the uppermost surfaces of the solid electrolyte particles corresponds to the number of pixels in which the active material particles appeared on the uppermost surface of the particle layer when the surface of the particle layer was observed from the vertical direction.

The ratio of the number of columns in which the values (P1-A) of the positions of the uppermost surfaces of the active material particles were greater than the values (P2-A) of the positions of the uppermost surfaces of the solid electrolyte particles to the total number of columns in the image was calculated. The obtained value was evaluated as the area ratio of the exposed surfaces of the active material particles on the surface (upper surface) of the particle layer on the side opposite to the side in contact with the resin base material.

Similarly, in each column having a horizontal width of 1 pixel, the values (P1-B) of the positions of the lowermost surfaces of the active material particles were compared with the values (P2-B) of the positions of the lowermost surfaces of the solid electrolyte particles. Then, the number of columns in which the values (P2-A) of the positions of the lowermost surfaces of the active material particles were smaller than the values (P2-B) of the positions of the outermost surfaces of the solid electrolyte particles was recorded. That is, when the values (P2-A) of the positions of the lowermost surfaces of the active material particles were smaller than the values (P2-B) of the positions of the outermost surfaces of the solid electrolyte particles, it was determined that the active material particles appeared on the outermost surface of the particle layer on the side in contact with the resin base material.

The ratio of the number of columns in which the values (P1-B) of the positions of the lowermost surfaces of the active material particles were smaller than the values (P2-B) of the positions of the lowermost surfaces of the solid electrolyte particles to the total number of the columns in the image was calculated. The obtained value was evaluated as the area ratio of the exposed surfaces of the active material particles on the surface (lower surface) of the particle layer on the side in contact with the resin base material.

The difference between the area ratio of the exposed surfaces of the active material particles on the surface of the particle layer on the side in contact with the resin base material and the area ratio of the exposed surfaces of the active material particles on the other surface of the particle layer, that is, the surface of the particle layer on the side opposite to the side in contact with the resin base material, each of which was calculated by the above-described method, was calculated.

This processing was performed on 103 active material particles observed in an SEM image obtained by capturing three particle layers on the same electrode base material. Specifically, the above processing was performed on each of the three particle layers illustrated FIG. 24.

According to the above evaluation, O was assigned when the difference was from 1% to 70%, whereas X was assigned when the difference was outside the range from 1% to 70%. That is, "O" in Table 4 indicates that the difference between the ratio at which the active material particles appeared on the outermost surface of the particle layer on the side in contact with the resin base material and the ratio at which the active material particles appeared on the outermost surface of the particle layer on the side opposite to the side in contact with the resin base material is 1 to 70 area%.

<Method for Calculating Average Height of Active Material Particles>

Active material particles and solid electrolyte particles were detected and identified by the above-described method from a BIB-SEM image acquired under the above-described conditions. An image corresponding to one layer was cut out so as to include the resin base material was used as an image for calculating an average height of the active material particles. Using the above-described method, an image (FIG. 25B) in which noise was eliminated from an image in which only the active material particles were represented by white pixels was obtained. The obtained image was divided into columns each having a horizontal width of 1 pixel, and the positions (P1-A) of the uppermost surfaces of the active material particles were recorded by the above-described method.

In columns in which the active material particles were present, differences (distances) between P1-A and the upper surface of the resin base material were determined. An average of the obtained values was calculated.

A length per pixel of the SEM image was determined from a scale in the image and multiplied by the above-described average value to calculate an actual average height of the active material particles. For example, in FIG. 25B, a length of one pixel was 0.11 $\mu$m, and an average value of the uppermost surfaces of the active material particles was 40.3 pixels, therefore, the average height of the active material particles was determined as 4.4 $\mu$m. The same processing was also performed on three SEM images of the same electrode base material in different fields of view, and an overall average value was used as the average height of the active material particles from the resin base material.

Electrodes (positive electrodes) were manufactured using the electrode base materials of Examples 1 to 10, and all-solid-state batteries were assembled by the above-described method. For the all-solid-state batteries 1 to 10 manufactured using the electrode base materials of Examples 1 to 10, evaluation results of their rate characteristics are shown. A method for measuring the rate characteristics will be described later.

[Table 5]

| | Removal unit U4 | | Rate characteristics | Evaluation |
|---|---|---|---|---|
| | Sintering atmosphere | Sintering temperature (°C) | R | |
| Comparative example 1 | Air | 575 | 0.2C | B |
| Example 1 | Air | 575 | 0.4C | A |
| Example 2 | Air | 575 | 0.5C | A |
| Example 3 | Air | 575 | 0.4C | A |
| Example 4 | Air | 575 | 0.4C | A |
| Example 5 | Air | 600 | 0.4C | A |
| Example 6 | Air | 575 | 0.5C | A |
| Example 7 | Ar-H$_2$ | 650 | 0.4C | A |
| Example 8 | Ar-H$_2$ | 650 | 0.5C | A |
| Example 9 | Ar-H$_2$ | 650 | 0.5C | A |
| Example 10 | Air | 575 | 0.4C | A |

In the Table, "Air" indicates that sintering was performed in air. Furthermore, "Ar-H$_2$" indicates that sintering was performed in a reducing atmosphere (Ar-H$_2$).

Note that in the evaluation of the rate characteristics of Examples 1 to 9 and Comparative Example 1, an actual capacity of each positive-electrode active material was set to 120 mAh/g for LCO, 130 mAh/g for NMC, and 150 mAh/g for LFP and LVP. A cut-off voltage was set to 4.2 V/2.6 V for LCO, 4.2 V/2.6 V for NMC, and 3.8 V/2.5 V for LFP and LVP.

Hereinafter, methods for evaluating the rate characteristic will be described.

<Rate Characteristics>

On the basis of the mass M (g/cm$^2$) of active material particles per unit area of the electrode base materials, the total mass of active material particles in the electrodes is calculated (M $\times$ the number of laminated layers $\times$ the electrode area (cm$^2$)) to determine a current rate.

The mass M of active material particles per unit area is calculated as follows.

The weight of the first base material 11a after the first particles P1 have been filled by the first filling apparatus is measured. Next, the weight of the first base material 11a after the above-described particles P1 on the first base material 11a have been transferred to the second base material 11b is measured. By taking the difference and dividing it by the area of the first base material 11a (the area of the uneven regions), the mass M of active material particles per unit area was calculated. In the present disclosure, the mass M of active material particles per unit area was calculated using the above-described method.

As another calculation method, a method using ICP emission spectrometry may be used. Three levels of first base materials 11a, whose mass M (g/cm$^2$) of active material particles per unit area has been determined in advance by the above-described method or the like, are prepared. These first base materials 11a are dissolved by microwave acid decomposition (ETHOS PRO), and the acid decomposition solution is diluted with ultrapure water to perform ICP-AES measurement (CIROS CCD) for quantification of the Co element. A calibration curve of the mass M (g/cm$^2$) of active material particles per unit area relative to the obtained element concentration is obtained. The mass M (g/cm$^2$) of active material particles can then be calculated using the calibration curve.

Note that the actual capacity of LCO was set to 120 mAh/g, and the cut-off voltage (vs. Li) was set to 4.2 V (for charging) / 2.6 V (for discharging). Charging and discharging measurements (constant current mode) were performed at each rate using a charging and discharging apparatus (manufactured by BioLogic Science Instruments SAS), and the capacity retention rate (discharge capacity/charge capacity $\times$ 100%) was measured. A maximum rate R at which the capacity retention rate was at least 80% was determined. On the basis of the maximum rate R thus obtained, rate characteristics were evaluated according to the following evaluation criteria.

A:

$$R \geq 0.3C$$

B:

$$0.3C > R$$

When the evaluation result of the above-described rate characteristics was A, it was determined that excellent electron conductivity and ionic conductivity were achieved and that the internal resistance of the electrode was sufficiently suppressed.

As a result, the evaluation of the rate characteristics of Examples 1 to 9 was A, and it was confirmed that the internal resistance of the electrodes was sufficiently suppressed.

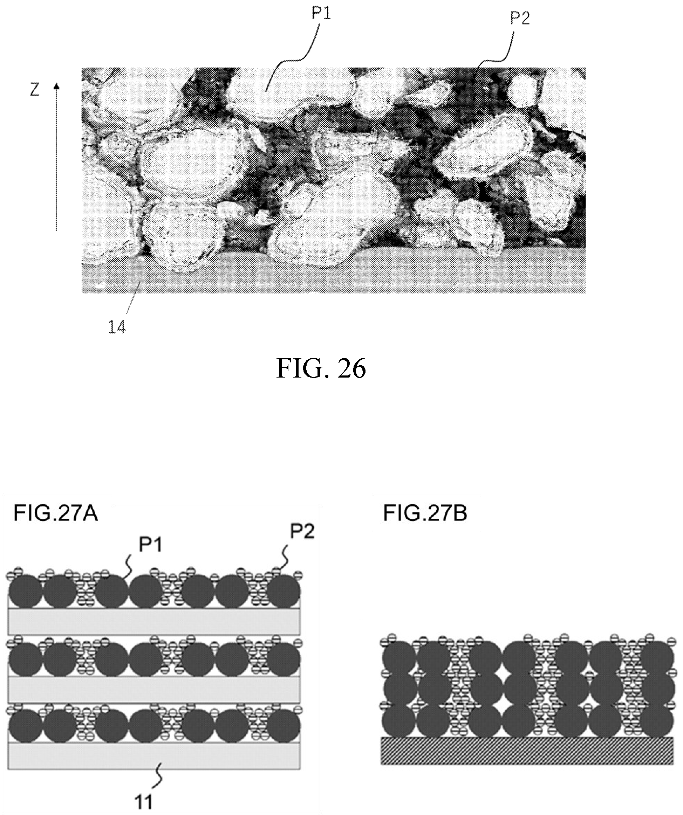

FIG. 26 is a BIB-SEM image of a cross section of an electrode manufactured using the electrode base material 2 of Example 1. The base material has been removed by sintering, and sintering of the particles has progressed. On the positive-electrode collector (Al foil) of the substrate 14, LCO serving as the first particles P1 and LBO serving as the second particles P2 are arranged, and it is confirmed that LCO is in contact with the substrate 14 in a greater amount. Furthermore, it is also confirmed that both the LCO particles and the LBO particles are arranged so as to be connected to particles of the same type in the z direction in the figure. This indicates that electron conduction and ionic conduction can occur without interruption in the laminating direction, that is, the z direction. Such a structure is realized by regularly arranging particles on an electrode base material, which is an electrode precursor.

FIG. 27A is a schematic view of an electrode base material laminate manufactured by laminating the electrode base materials 1 of Example 1. For explanatory purposes, the particles P1 and P2 are illustrated as spherical and having the same particle diameter.

As described above, in the electrode base material 1 of Example 1, a large amount of the second solid electrolyte particles are in contact with the active material particles at positions on the side opposite to the base material side, thereby forming dense regions. On the other hand, on the base material side, large surface areas of the particles P1 serving as the active material particles are exposed and evenly distributed. It is considered that, even if the base materials are removed by sintering, the particle arrangement structure of each base material is maintained, and the structure as illustrated in FIG. 27B is realized. Therefore, even in the electrode from which the resin base materials have been removed by sintering, the structure in which the particle layers are laminated is maintained, and in the thickness direction of the laminated particle layers, the active material particles that can effectively perform electron conduction and the solid electrolyte particles that can effectively perform ionic conduction are in contact with each other. Accordingly, it is considered that, even in an electrode manufactured by laminating the electrode base materials, both electron conduction and ionic conduction are smoothly performed, and the internal resistance can be suppressed.

In Examples 1 to 10, the laminate in which three identical positive-electrode base materials were laminated was used, however, a laminate in which a plurality of types of positive-electrode base materials having the configuration of the present disclosure are laminated may also be used. Furthermore, the electrode base material may also be used as a material used in a coating process (including the manufacturing technology of a multilayer ceramic capacitor, MLCC) and a powder pressing process, which are conventionally known manufacturing methods.

The present disclosure is not limited by the embodiments, and can be variously changed and modified without departing from the spirit and the scope of the present disclosure. Therefore, in order to make the scope of the present disclosure public, the following claims are appended.

This application claims the benefit of Japanese Patent Application No. 2023-136586, filed August 24, 2023, which is hereby incorporated by reference herein in its entirety.

## Claims

1. An electrode base material for use in manufacturing an electrode,
   the electrode base material comprising:

   a resin base material; and
   active material particles and solid electrolyte particles on the resin base material,
   a particle layer comprising the active material particles and the solid electrolyte particles being formed on the resin base material,
   wherein, when the particle layer is viewed from a surface side in contact with the resin base material or from a surface side opposite to the side in contact with the resin base material, the solid electrolyte particles are arranged so as to cover at least a part of surfaces of the active material particles, and
   wherein, in an observation of a cross section of the particle layer with a scanning electron microscope (SEM), a difference between an area ratio of exposed surfaces of the active material particles on a surface of the particle layer in contact with the resin base material and an area ratio of exposed surfaces of the active material particles on a surface of the particle layer on a side opposite to the side in contact with the resin base material is 1 to 70 area%.

2. The electrode base material according to claim 1, wherein an average height of the active material particles from a surface of the resin base material is 1 to 50 $\mu$m.

3. The electrode base material according to claim 1 or 2, wherein the difference is 5 to 60 area%.

4. The electrode base material according to claim 1 or 2, wherein the difference is 10 to 50 area%.

5. The electrode base material according to any one of claims 1 to 4, wherein the solid electrolyte particles comprise at least one selected from the group consisting of LiB oxide-based electrolyte particles, NASICON-type oxide-based electrolyte particles, perovskite-type oxide-based electrolyte particles, and garnet-type oxide-based electrolyte particles, and
   the active material particles comprise Li-Co oxide-based active material particles.

6. The electrode base material according to any one of claims 1 to 4, wherein the solid electrolyte particles comprise at least one selected from the group consisting of LiB oxide-based electrolyte particles, NASICON-type oxide-based electrolyte particles, perovskite-type oxide-based electrolyte particles, and garnet-type oxide-based electrolyte particles, and
   the active material particles comprise Li-PO4 oxide-based active material particles.

7. The electrode base material according to any one of claims 1 to 4, wherein the solid electrolyte particles comprise at least one selected from the group consisting of LiB oxide-based electrolyte particles, NASICON-type oxide-based electrolyte particles, perovskite-type oxide-based electrolyte particles, and garnet-type oxide-based electrolyte particles, and
   the active material particles comprise Si-based active material particles.

**8.** The electrode base material according to any one of claims 1 to 4, wherein the solid electrolyte particles comprise at least one selected from the group consisting of LiB oxide-based electrolyte particles, NASICON-type oxide-based electrolyte particles, perovskite-type oxide-based electrolyte particles, and garnet-type oxide-based electrolyte particles, and

the active material particles comprise graphite-based active material particles.

**9.** The electrode base material according to any one of claims 1 to 8, wherein a coverage ratio of the surface of the resin base material by the active material particles and the solid electrolyte particles is from 60% to 99%.

**10.** An electrode base material laminate, wherein a plurality of electrode base materials according to any one of claims 1 to 9 is laminated.

**11.** The electrode base material laminate according to claim 10, wherein

the resin base material and the particle layer are alternately arranged in a cross section of the electrode base material laminate.

**12.** An electrode of a secondary battery, which is a sintered compact of the electrode base material according to any one of claims 1 to 9.

**13.** A sintered compact of the electrode base material according to any one of claims 1 to 9, which is a sintered compact in which at least a part of the resin base material of the electrode base material has been removed.

**14.** A secondary battery comprising: the electrode according to claim 12 or 13; and an electrolyte layer adjacent to the electrode.

**15.** A method for manufacturing the electrode base material according to any one of claims 1 to 9 for use in manufacturing an electrode,

the method comprising:

a step of preparing the resin base material comprising an adhesive portion;
a step of arranging the active material particles on a surface of the adhesive portion;
a step of rubbing surfaces of the active material particles arranged on the surface of the adhesive portion; and
a step of arranging the solid electrolyte particles on the surface of the adhesive portion and on the rubbed surfaces of the active material particles.

**16.** The method for manufacturing the electrode base material according to claim 15, wherein the step of rubbing comprises a step of rubbing the surfaces of the active material particles with magnetic particles.

**17.** A method for manufacturing an electrode base material for use in manufacturing an electrode, wherein

the electrode base material comprises
a resin base material, and
active material particles and solid electrolyte particles on the resin base material,
a particle layer comprising the active material particles and the solid electrolyte particles being formed on the resin base material and,
wherein, when the particle layer is viewed from a surface side in contact with the resin base material or from a surface side opposite to the side in contact with the resin base material, the solid electrolyte particles are arranged so as to cover at least a part of surfaces of the active material particles,
the method comprising:

a step of preparing the resin base material comprising an adhesive portion;
a step of arranging the active material particles on a surface of the adhesive portion;
a step of rubbing surfaces of the active material particles arranged on the surface of the adhesive portion; and
a step of arranging the solid electrolyte particles on the surface of the adhesive portion and on the rubbed surfaces of the active material particles.

**18.** The method for manufacturing the electrode base material according to claim 17, wherein the step of rubbing comprises a step of rubbing the surfaces of the active material particles with magnetic particles.

19. A method for manufacturing an electrode, the method comprising:

   a step of laminating a plurality of electrode base materials according to any one of claims 1 to 9 to form a laminate;
   a step of removing the resin base material from the laminate to obtain a three-dimensional object; and
   a step of pressing the three-dimensional object to obtain an electrode.

20. A method for manufacturing a secondary battery,
   the method comprising:

   a step of preparing an electrode according to the method of claim 19; and
   a step of laminating the electrode, a collector, and an electrolyte.

21. A method for manufacturing a secondary battery,
   the method comprising:

   a step of preparing an electrode according to the method of claim 19; and
   a step of providing a solid electrolyte adjacent to the electrode.

22. A method for manufacturing a secondary battery, the method comprising:

   a step of laminating a plurality of electrode base materials according to any one of claims 1 to 9 to form a laminate;
   a step of collectively providing a solid electrolyte adjacent to the laminate;
   a step of removing the resin base material from the laminate to obtain a three-dimensional object;
   a step of pressing the three-dimensional object; and
   a step of laminating a collector on the pressed three-dimensional object.

FIG. 1

FIG. 2

FIG. 3

FIG. 4

FIG.5A

FIG.5B

FIG.5C

FIG. 6

FIG.7A

FIG.7B

FIG. 8

FIG. 9

FIG. 10A

P1

FIG.10B

P1

P2

FIG.11

FIG.12

FIG.13

FIG.14

START

LAMINATE PLURALITY OF ELECTRODE BASE MATERIALS TO FORM LAMINATE — S201

REMOVE RESIN BASE MATERIAL FROM LAMINATE TO OBTAIN THREE-DIMENSIONAL OBJECT — S202

PRESS THREE-DIMENSIONAL OBJECT — S203

END

FIG. 15

FIG. 16

FIG. 17

FIG.18A

15

12

11b

14

FIG.18B

16

FIG.18C

P2

P1

100

Control unit U1

Particle-layer forming unit U2

12

11

Lamination unit U3

15

Removal unit U4

16

Post-processing unit U5

FIG. 19

FIG.20A

METHOD 1

START

ARRANGE FIRST
PARTICLES ON RESIN
BASE MATERIAL

ARRANGE SECOND
PARTICLES ON RESIN
BASE MATERIAL

END

FIG.20B

METHOD 2

START

ARRANGE FIRST
PARTICLES ON RESIN
BASE MATERIAL

RUB FIRST PARTICLES

ARRANGE SECOND
PARTICLES ON RESIN
BASE MATERIAL

END

FIG.20C

METHOD 3

START

ARRANGE FIRST
PARTICLES ON RESIN
BASE MATERIAL

RUB FIRST PARTICLES

ARRANGE SECOND
PARTICLES ON RESIN
BASE MATERIAL

RUB FIRST AND SECOND
PARTICLES

END

FIG.20D

METHOD 4

START

ARRANGE FIRST
PARTICLES ON RESIN
BASE MATERIAL

RUB FIRST PARTICLES

ARRANGE SECOND
PARTICLES ON RESIN
BASE MATERIAL

ARRANGE THIRD
PARTICLES ON FIRST
AND SECOND PARTICLES

END

FIG.21A

11a

A                          A

FIG.21B

S

d   k

11a

FIG.22A

FIG.22B

FIG.23A

FIG.23B

FIG. 24

FIG.25A

FIG.25B

FIG.25C

FIG.25D

FIG. 26

FIG.27A

FIG.27B

## INTERNATIONAL SEARCH REPORT

| International application No. |
| --- |
| **PCT/JP2024/029777** |

**A. CLASSIFICATION OF SUBJECT MATTER**

*H01M 4/13*(2010.01)i; *H01M 4/04*(2006.01)i; *H01M 4/58*(2010.01)i; *H01M 4/62*(2006.01)i; *H01M 4/131*(2010.01)i; *H01M 4/133*(2010.01)i; *H01M 4/134*(2010.01)i; *H01M 4/139*(2010.01)i; *H01M 4/505*(2010.01)i; *H01M 4/525*(2010.01)i

FI: H01M4/13; H01M4/62 Z; H01M4/525; H01M4/58; H01M4/139; H01M4/04 A; H01M4/131; H01M4/133; H01M4/134; H01M4/505

According to International Patent Classification (IPC) or to both national classification and IPC

**B. FIELDS SEARCHED**

Minimum documentation searched (classification system followed by classification symbols)

H01M4/00-4/62, 10/00-10/39

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2022-88258 A (CANON KABUSHIKI KAISHA) 14 June 2022 (2022-06-14) paragraphs [0017]-[0127], fig. 11-12, 14 | 1-5, 7-22 |
| Y | | 1-16, 19-22 |
| Y | JP 2018-106974 A (SAMSUNG ELECTRONICS CO., LTD.) 05 July 2018 (2018-07-05) paragraphs [0041]-[0042] | 1-16, 19-22 |
| Y | KR 10-2019-0030085 A (LG CHEMICAL LTD.) 21 March 2019 (2019-03-21) paragraphs [0020]-[0025], fig. 2 | 1-16, 19-22 |
| Y | JP 2017-103065 A (TOYOTA JIDOSHA KABUSHIKI KAISHA) 08 June 2017 (2017-06-08) paragraphs [0054], [0081] | 6, 9-16, 19-22 |
| Y | JP 2020-47462 A (TAIYO YUDEN CO., LTD.) 26 March 2020 (2020-03-26) paragraphs [0025], [0042] | 6, 9-16, 19-22 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 November 2024** | **19 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/029777**

| Patent document cited in search report | | | Publication date (day/month/year) | Patent family member(s) | | | Publication date (day/month/year) |
|---|---|---|---|---|---|---|---|
| JP | 2022-88258 | A | 14 June 2022 | US | 2023/0307636 | A1 | |
| | | | | paragraphs [0090]-[0364], fig. 21-22, 24 | | | |
| | | | | WO | 2022/118721 | A1 | |
| JP | 2018-106974 | A | 05 July 2018 | US | 2018/0219219 | A1 | |
| | | | | paragraphs [0035]-[0036] | | | |
| | | | | KR | 10-2018-0076275 | A | |
| KR | 10-2019-0030085 | A | 21 March 2019 | (Family: none) | | | |
| JP | 2017-103065 | A | 08 June 2017 | US | 2017/0155127 | A1 | |
| | | | | paragraphs [0094], [0134] | | | |
| JP | 2020-47462 | A | 26 March 2020 | US | 2020/0091522 | A1 | |
| | | | | paragraphs [0024], [0047] | | | |
| | | | | CN | 110931842 | A | |

Form PCT/ISA/210 (patent family annex) (July 2022)

## REFERENCES CITED IN THE DESCRIPTION

**Patent documents cited in the description**

- JP 2019137060 A
- JP 2021039848 A
- JP 2020198301 A
- JP 2022130301 A
- JP 2023136586 A